# EUROPEAN PATENT SPECIFICATION

(11) **EP 0 955 306 B1**
(45) Date of publication and mention of the grant of the patent: **22.01.2003**
(21) Application number: 99500064.3
(22) Date of filing: 26.04.1999
(51) Int. Cl.: C07F 17/00, C08F 10/00

(54) **Functionalized metallocene compounds, synthesis process and use thereof**
Funktionalisierte Metallocene, deren Herstellung und deren Verwendung
Metallocènes fonctionalisés, leur préparation et leur utilisation

(30) Priority: 29.04.1998 EP 98500105
(43) Date of publication of application: 10.11.1999
(73) Proprietor: REPSOL QUIMICA S.A., E-28046 Madrid (ES)
(72) Inventor: Hidalgo LLinas, Gerardo, 30319 Cartagena, Murcia (ES); Munoz-Escalona Lafuente, Antonio, 28223 Madrid (ES)
(74) Representative: Del Santo Abril, Natividad

(56) References cited:
- EP-A- 0 739 897
- CHEMICAL ABSTRACTS, vol. 124, no. 14, 1 April 1996 (1996-04-01) Columbus, Ohio, US; abstract no. 177219, NAKAJIMA, MASASHI ET AL: "Metallocene derivative catalyst components, their manufacture and use in polymerization of olefins" XP002074241 & JP 07 268014 A (TONEN CORP, JAPAN)
- CHEMICAL ABSTRACTS, vol. 124, no. 8, 19 February 1996 (1996-02-19) Columbus, Ohio, US; abstract no. 88136, MURATA, MASAHIDE ET AL: "Metallocene derivative catalyst components for polymerization of olefins, their manufacture, and manufacture of polyolefins using them" XP002074242 & JP 07 268029 A (TONEN CORP, JAPAN)
- CHEMICAL ABSTRACTS, vol. 119, no. 15, 11 October 1993 (1993-10-11) Columbus, Ohio, US; abstract no. 160448, QIAN, YANLONG ET AL: "Synthesis of (3-methoxypropyl)cyclopentadienyltitanium and -zirconium complexes" XP002074243 & POLYHEDRON (1993), 12(8), 967-70 CODEN: PLYHDE;ISSN: 0277-5387,1993,
- CHEMICAL ABSTRACTS, vol. 112, no. 25, 18 June 1990 (1990-06-18) Columbus, Ohio, US; abstract no. 234760, KARLSSON, SUSANNE ET AL: "Hydrozirconation of oleyl alcohol" XP002074244 & JAOCS, J. AM. OIL CHEM. SOC. (1989), 66(12), 1815-21 CODEN: JJASDH,1989,

## Description

The present invention relates to new metallocene compounds and to the process for their preparation.

### STATE OF THE ART

The metallocene compounds field has experimented a big development since the first syntheses of these compounds in the fifties (G. Wilkinson et al., *J. Am. Chem. Soc*., 1953, 75, 1011). This development is basically due to the large increase in the number of applications wherein these compounds are used. So, they can be used as catalysts of hydrogenation, epoxidation, double bond isomerization, ketons reduction, aldolic reaction, synthesis of different substituted olefins, etc., but their largest use is as catalyst components for olefin polymerization, as they can be activated for this use by alumoxanes or other non-coordinative anion precursors (for example boron compounds). In this field metallocenes of group 4 (Ti, Zr, Hf) in particular have been developed, but also metallocenes of groups 3, 5 and 6. Metallocenes were prepared for working in very different conditions (solution, suspension, mass, gas phase, high pressure and temperature processes, etc.). They were used for polymerizing and copolymerizing simple alpha-olefins, basically ethylene and propylene, but also more complex olefins, cyclolefins, diolefins and also olefins with polar groups; for example W.A. Nugent et al., *J. Am. Chem. Soc.* 1989, 111, 6435; R.M. Waymouth et al., *J. Am. Chem. Soc.* 1992, 114, 9679; H Yasuda et al., *Macromol.Chem.Phys*, 1995, 196, 2417).

For adapting to the different needs of each application very different metallocenes were synthesized, basically differing for the different substitution around the cyclopentadienyl rings that form it, as it is possible to influence in this way, both sterically and electronically, the reactivity of their active centers.

A development in the field of metallocenes has been the preparation of functionalized metallocenes, i. e. metallocenes containing a functional group that allows the preparation of more complex structures.

EP 372414 discloses metallocenes having a hydrocarbon group containing a double bond linked to the η⁵ ligand.

In Journal of Organometallic Chemistry (vol. **544,** *1997,* 133-137), (hydroxy-cyclopentadienyl)(cyclopentadienyl) titanium dichloride is obtained as a by product of a reaction for synthesizing (triethylsilyloxy-cyclopentadienyl)(cyclopentadienyl) titanium dichloride. However, all the attempts to produce single crystals of hydroxy-complex as well as all the attempts to hydrolyze in controlled conditions triethylsilyloxy complex have been unsuccessful since this compounds are not very stable in solution.

Furthermore the obtained hydroxy-compound is not very reactive since the OH group is directly bond to the aromatic ring.

It has been surprisingly found that it is possible to prepare metallocene compounds having an hydroxyl group connected to the η⁵ ligand through a chain. These compounds are very useful since they can be used as a starting material for preparing more complex compounds comprising one or more transition metal atoms.

An object of the present invention is to provide metallocene compounds having an hydroxyl group connected to the η⁵ ligand through a chain.

A further object of the present invention is to provide a process for obtaining these metallocene compounds.

### DETAILED DESCRIPTION OF THE INVENTION

The present invention relates to metallocene compounds defined by the following formulas:

(LRₖ)_{z}[LR_{k-f}(R^{I}OH)_{f}]ₓMX_{y} I

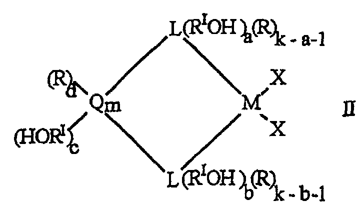

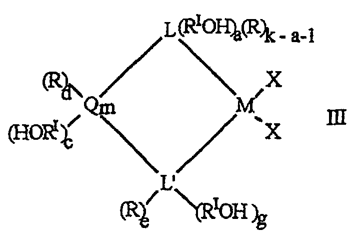

wherein:
**L**, equal to or different from each other, is selected from the group comprising: cyclopentadienyl, indenyl, tetrahydroindenyl, fluorenyl, octahydrofluorenyl and benzoindenyl; preferably at least one L is a fluorenyl or octahydrofluorenyl ring;
each **R** is independently selected from hydrogen, C₁-C₂₀ alkyl, C₃-C₂₀ cycloalkyl, C₆-C₂₀ aryl, C₃-C₂₀ alkenyl, C₇-C₂₀ arylalkyl, C₇-C₂₀ alkylaryl, C₈-C₂₀ arylalkenyl, linear or branched, optionally substituted by 1 to 10 halogen atoms, or a group SiR^{II}₃;
each **R**^{**I**} is independently a group SiR^{II}₂ or a divalent aliphatic or aromatic hydrocarbon group containing from 1 to 20 carbon atoms, optionally containing from 1 to 5 heteroatoms of groups 14 to 16 of the periodic table of the elements and boron; preferably it is C₁-C₂₀ alkylene, C₃-C₂₀ cycloalkylene, C₆-C₂₀ arylene, C₇-C₂₀ alkenyl, C₇-C₂₀ arylalkylene, or alkylarylene, linear or branched, or a group SiR^{II}₂;
each **Q** is independently selected from B, C, Si, Ge, Sn;
**M** is a metal of group 3, 4 or 10 of the Periodic Table, Lanthanide or Actinide; preferably it is titanium, zirconium or hafnium;
each **X** is independently selected from: hydrogen, chlorine, bromine, OR^{II}, NR^{II}₂, C₁-C₂₀ alkyl or C₆-C₂₀ aryl;
each **R**^{**II**} is independently selected from C₁-C₂₀ alkyl, C₃-C₂₀ cycloalkyl, C₆-C₂₀ aryl, C₃-C₂₀ alkenyl, C₇-C₂₀ arylalkyl, C₈-C₂₀ arylalkenyl or C₇-C₂₀ alkylaryl, linear or branched; preferably R^{II} is methyl, ethyl, isopropyl;
**L'** is N or O;
**k** depends on the type of L; more specifically when L is cyclopentadienyl k is equal to 5, when L is indenyl k is equal to 7, when L is fluorenyl or benzoindenyl k is equal to 9, when L is tetrahydroindenyl k is equal to 11 and when L is octahydrofluorenyl k is equal to 17;
**z** is equal to 0, 1 or 2;
**x** is equal to 1, 2 or 3;
**y** is equal to 1, 2 or 3;
**x** + **y** + **z** is equal to the valence of **M**;
**m** is an integer which can assume the values 1, 2, 3 or 4;
**a** and **b** are integers whose value ranges from 0 to k-1;
**f** is an integer whose value ranges from 1 to k; preferably f is 1;
**g** is an integer whose value is 0 or 1;
**c** and **e** are equal to 0 or 1;
**a + b + c** is at least 1; preferably a + b + c is 1 or 2;
**a + g + c** is at least 1; preferably a + g + c is 1 or 2;
**d** is equal to 0, 1 or 2;
when **Q** is **B**, then **c + d** = 1;
when **Q** is C, Si, Ge or Sn, then **c + d** = 2;
when **L'** is N, then **g + e** = 1;
when **L'** is O, then **g** = 0 and **e** = 0.

Non limiting examples of R^{I}OH are:
CH₂-CH₂-OH; CH₂-CH₂-CH₂-OH; O-CH₂-CH₂-OH; SiMe₂-CH₂-CH₂-OH; CH₂-C₅H₅-CH₂-OH; CH(C₂H₅)-CH₂-OH; C(CH₃)₂-C(CH₃)₂-OH; CH(CH₃)-CH(CH₃)-OH, SiMe₂-CH₂- CH₂-CH₂-OH.

Preferably R^{I}-OH is selected from CH₂-CH₂-OH, CH₂-CH₂-CH₂-OH, O-CH₂-CH₂-OH, SiMe₂-CH₂-CH₂-OH,. SiMe₂-CH₂- CH₂-CH₂-OH.

Preferred structures of compounds of formula I, II and III are the following:

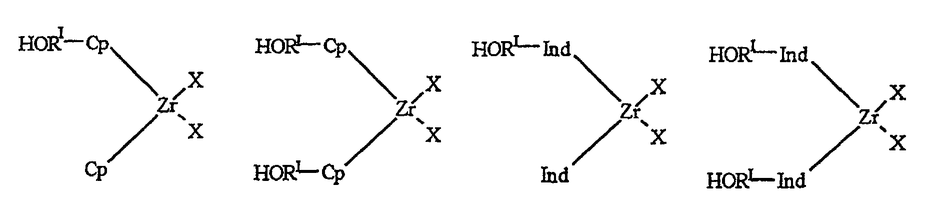

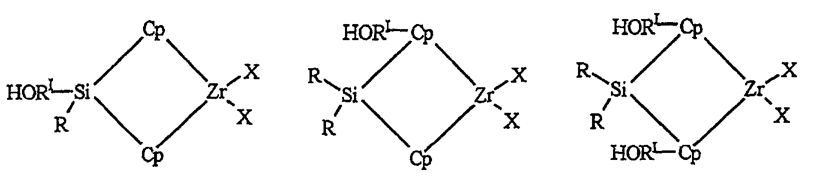

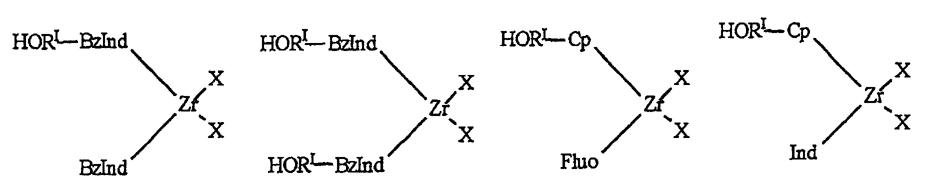

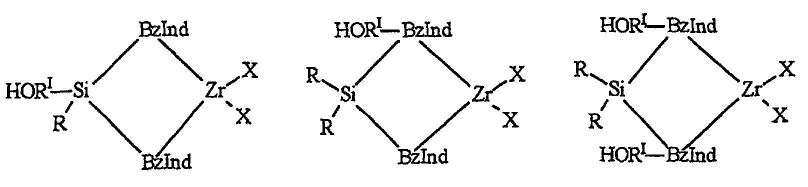

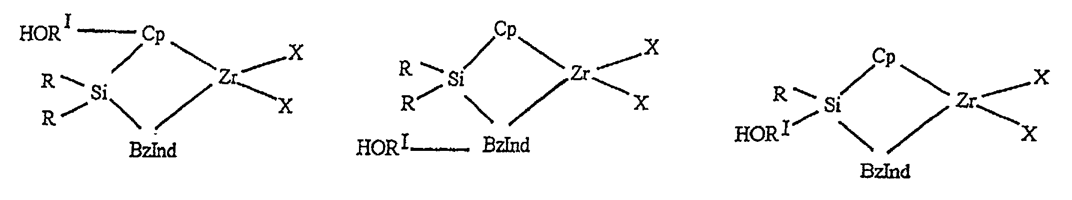

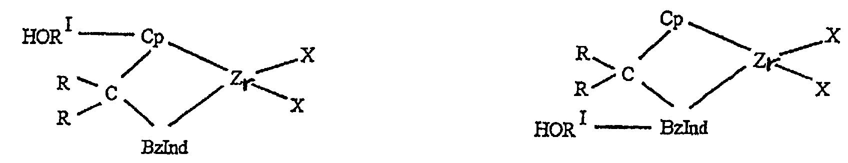

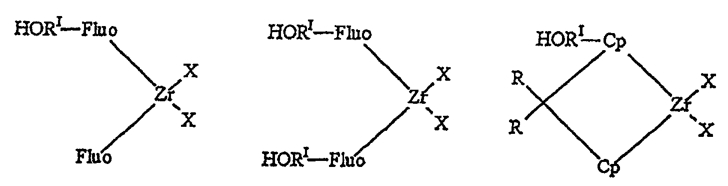

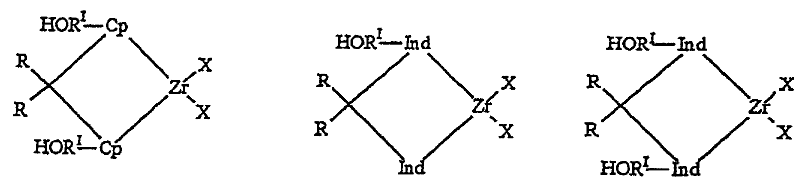

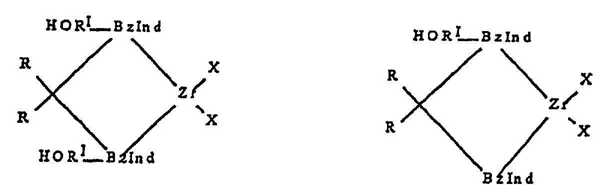

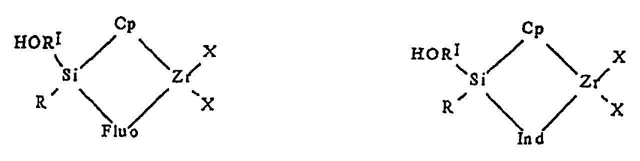

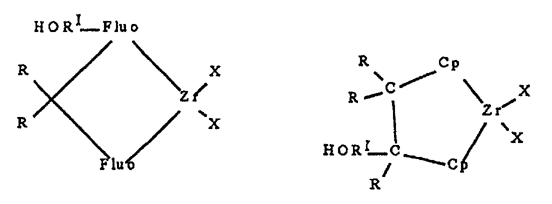

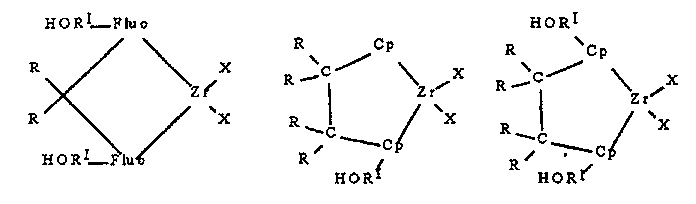

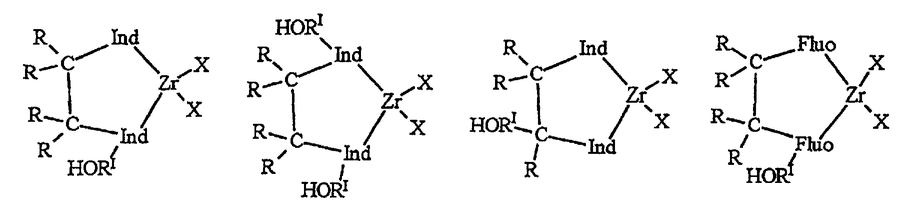

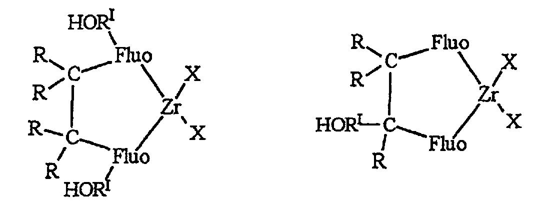

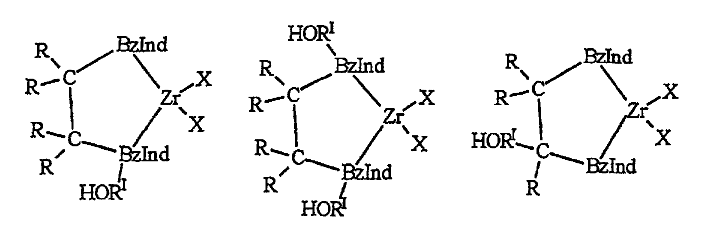

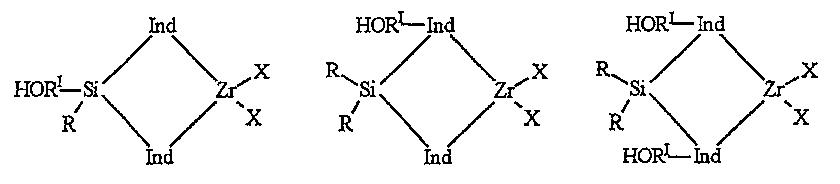

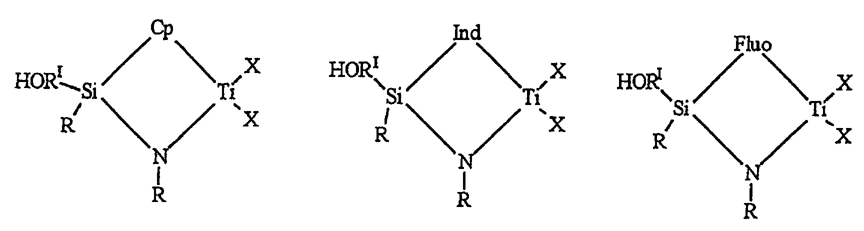

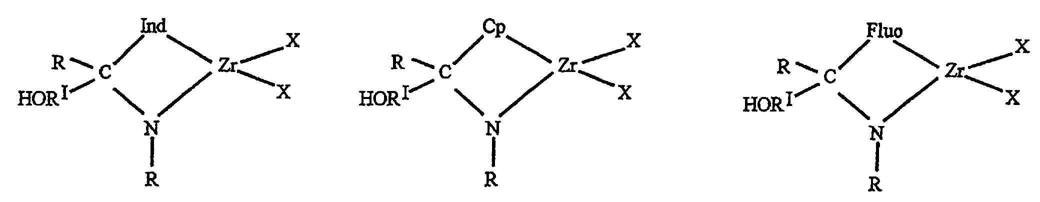

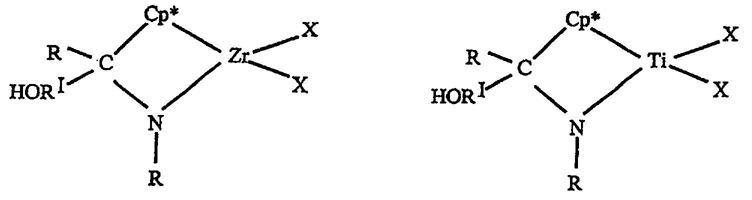

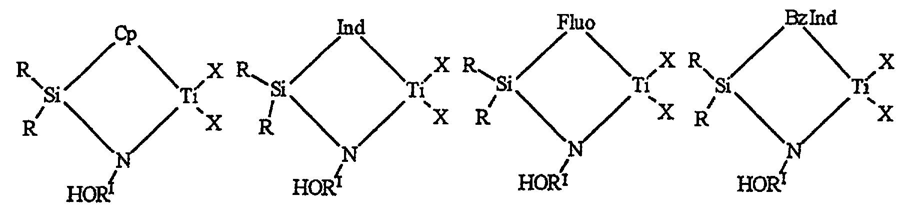

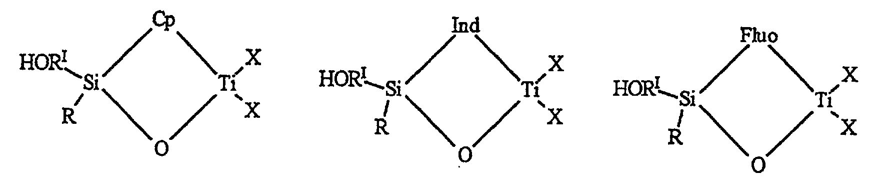

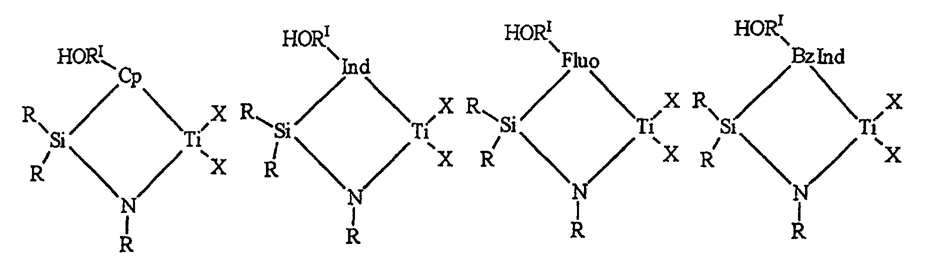

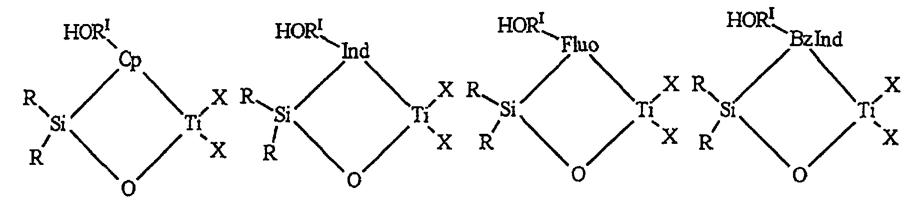

Cp, Ind, Bzlnd and Fluo indicate respectively a cyclopentadienyl, indenyl, benzoindenyl and fluorenyl ring optionally substituted by C₁-C₂₀ alkyl , C₃-C₂₀ cycloalkyl, C₆-C₂₀ aryl, C₃-C₂₀ alkenyl, C₇-C₂₀ arylalkyl, C₈-C₂₀ arylalkenyl or C₇-C₂₀ alkylaryl; the maximum number of substituents depends on the amount of hydrogen which can be substituted; R, R^{I} and X have the above indicated meaning.

Preferred compounds for use in the present invention are the following:
bis(2-hydroxyethyl-cyclopentadienyl) zirconium dichloride;
(2-hydroxyethyl-cyclopentadienyl)(cyclopentadienyl) zirconium dichloride ;
(2-hydroxyethyl-cyclopentadienyl)(indenyl) zirconium dichloride;
(2-hydroxyethyl-cyclopentadienyl)(2-methyl-indenyl) zirconium dichloride;
(2-hydroxyethyl-cyclopentadienyl)(fluorenyl) zirconium dichloride;
(2-hydroxyethyl-cyclopentadienyl)(9-methyl-fluorenyl) zirconium dichloride;
(2-hydroxyethyl-cyclopentadienyl)(pentamethylcyclopentadienyl) zirconium dichloride;
bis(3-hydroxypropyl-cyclopentadienyl) zirconium dichloride;
(3-hydroxypropyl-cyclopentadienyl)(cyclopentadienyl) zirconium dichloride;
(3-hydroxypropyl-cyclopentadienyl)(indenyl) zirconium dichloride;
(3-hydroxypropyl-cyclopentadienyl)(2-methyl-indenyl) zirconium dichloride;
(3-hydroxypropyl-cyclopentadienyl)(fluorenyl) zirconium dichloride;
(3-hydroxypropyl-cyclopentadienyl)(9-methyl-fluorenyl) zirconium dichloride;
(3-hydroxypropyl-cyclopentadienyl)(pentamethylcyclopentadienyl) zirconium dichloride;
bis(2-hydroxy-ethoxy-cyclopentadienyl) zirconium dichloride;
(2-hydroxy-ethoxy-cyclopentadienyl)(cyclopentadienyl) zirconium dichioride;
(2-hydroxy-ethoxy-cyclopentadienyl)(1-indenyl) zirconium dichloride;
(2-hydroxy-ethoxy-cyclopentadienyl)(2-methyl-indenyl) zirconium dichloride;
(2-hydroxy-ethoxy-cyclopentadienyl)(fluorenyl) zirconium dichloride;
(2-hydroxy-ethoxy-cyclopentadienyl)(9-methyl-fluorenyl) zirconium dichloride;
(2-hydroxy-ethoxy-cyclopentadienyl)(pentamethylcyclopentadienyl) zirconium dichloride;
bis(2-hydroxy-ethyl-(dimethyl)silyl-cyclopentadienyl) zirconium dichloride;
(2-hydroxy-ethyl-(dimethyl)silyl-cyclopentadienyl)(cyclopentadienyl) zirconium dichloride;
(2-hydroxy-ethyl-(dimethyl)silyl-cyclopentadienyl)(indenyl) zirconium dichloride;
(2-hydroxy-ethyl-(dimethyl)silyl-cyclopentadienyl)(2-methyl-indenyl) zirconium dichloride;
(2-hydroxy-ethyl-(dimethyl)silyl-cyclopentadienyl)(fluorenyl) zirconium dichloride;
(2-hydroxy-ethyl-(dimethyl)silyl-cyclopentadienyl)(9-methyl-fluorenyl) zirconium dichloride;
(2-hydroxy-ethyl-(dimethyl)silyl-cyclopentadienyl)(pentamethylcyclopentadienyl) zirconium dichloride;
(3-hydroxy-propyl-(dimethyl)silyl-cyclopentadienyl)(cyclopentadienyl) zirconium dichloride;
(3-hydroxy-propyl-ethyl-(dimethyl)silyl-cyclopentadienyl)(indenyl) zirconium dichloride;
(3-hydroxy-propyl-ethyl-(dimethyl)silyl-cyclopentadienyl)(2-methyl-indenyl) zirconium dichloride;
(3-hydroxy-propyl-ethyl-(dimethyl)silyl-cyclopentadienyl)(fluorenyl) zirconium dichloride;
(3-hydroxy-propyl-ethyl-(dimethyl)silyl-cyclopentadienyl)(9-methyl-fluorenyl) zirconium dichloride;
(3-hydroxy-propyl-ethyl-(dimethyl)silyl-cyclopentadienyl)(pentamethylcyclopentadienyl) zirconium dichloride;

bis(2-hydroxy-(dimethyl)silyl-cyclopentadienyl) zirconium dichloride;
(2-hydroxy-(dimethyl)silyl-cyclopentadienyl)(cyclopentadienyl) zirconium dichloride;
dimethylsilandiylbis(2-(2-hydroxyethyl)-cyclopentadienyl) zirconium dichloride;
dimethylsilandiylbis(3-(2-hydroxyethyl)-cyclopentadienyl) zirconium dichloride;
dimethylsilandiyl(3-(2-hydroxyethyl)-cyclopentadienyl) (ciclopentadienil)zirconium dichloride;
dimethylsilandiyl(2-(2-hydroxyethyl)-cyclopentadienyl)(1-indenyl) zirconium dichloride;
dimethylsilandiyl(3-(2-hydroxyethyl)-cyclopentadienyl)(1-indenyl) zirconium dichloride;
dimethylsilandiyl(2-(2-hydroxyethyl)-cyclopentadienyl)(1-(2-methyl-indenyl)) zirconium dichloride;
dimethylsilandiyl(3-(2-hydroxyethyl)-cyclopentadienyl)(1-(2-methyl-indenyl)) zirconium dichloride;
dimethylsilandiyl(2-(2-hydroxyethyl)-cyclopentadienyl)(9-fluorenyl) zirconium dichloride;
dimethylsilandiyl(3-(2-hydroxyethyl)-cyclopentadienyl)(9-fluorenyl) zirconium dichloride;
dimethylsilandiyl(2-(2-hydroxyethyl)-cyclopentadienyl)(9-(2-methyl-fluorenyl)) zirconium dichloride;
dimethylsilandiyl(3-(2-hydroxyethyl)-cyclopentadienyl)(9-(2-methyl-fluorenyl)) zirconium dichloride;
dimethylsilandiyl(3-(2-hydroxyethyl)-cyclopentadienyl)(1-(2methylbenzoindenyl)) zirconium dichloride;
dimethylsilandiylbis(2-(3-hydroxypropyl)-cyclopentadienyl) zirconium dichloride;
dimethylsilandiylbis(3-(3-hydroxyropyl)-cyclopentadienyl) zirconium dichloride;
dimethylsilandiyl(3-(3-hydroxyropyl)-cyclopentadienyl) (ciclopentadienil) zirconium dichloride;
dimethylsilandiyl(2-(3-hydroxypropyl)-cyclopentadienyl)(1-indenyl) zirconium dichloride;
dimethylsilandiyl(3-(3-hydroxyropyl)-cyclopentadienyl)(1-indenyl) zirconium dichloride;
dimethylsilandiyl(2-(3-hydroxypropyl)-cyclopentadienyl)(1-(2-methyl-indenyl)) zirconium dichloride;
dimethylsilandiyl(3-(3-hydroxyropyl)-cyclopentadienyl)(1-(2-methyl-indenyl)) zirconium dichloride;
dimethylsilandiyl(2-(3-hydroxypropyl)-cyclopentadienyl)(9-fluorenyl) zirconium dichloride;
dimethylsilandiy(3-(3-hydroxyropyl)-cydopentadienyl)(9-fluorenyl) zirconium dichloride;
dimethylsilandiyl(2-(3-hydroxypropyl)-cyclopentadienyl)(9-(2-methyl-fluorenyl)) zirconium dichloride;
dimethylsilandiyl(3-(3-hydroxyropyl)-cyclopentadienyl)(9-(2-methyl-fluorenyl)) zirconium dichloride;
dimethylsilandiyl(3-(3-hydroxyropyl)-cyclopentadienyl)(1-(2methylbenzoindenyl)) zirconium dichloride;
dimethylsilandiylbis(2-(2-hydroxy)-ethoxy-cyclopentadienyl) zirconium dichloride;
dimethylsilandiylbis(3-(2-hydroxy)-ethoxy-cyclopentadienyl) zirconium dichloride;
dimethylsilandiyl(2-(2-hydroxy)-ethoxy-cyclopentadienyl)(1-indenyl) zirconium dichloride;
dimethylsilandiy(3-(2-hydroxy)-ethoxy-cyclopentadienyl)(1-indenyl) zirconium dichloride;
dimethylsilandiyl(2-(2-hydroxy)-ethoxy-cyclopentadienyl)(1-(2-methyl-indenyl)) zirconium dichloride;
dimethylsilandiyl(3-(2-hydroxy)-ethoxy-cyclopentadienyl)(1-(2-methyl-indenyl)) zirconium dichloride;
dimethylsilandiyl(2-(2-hydroxy)-ethoxy-cyclopentadienyl)(9-fluorenyl) zirconium dichloride;
dimethylsilandiyl(3-(2-hydroxy)-ethoxy-cyclopentadienyl)(9-fluorenyl) zirconium dichloride;
dimethylsilandiyl(2-(2-hydroxy)-ethoxy-cyclopentadienyl)(9-(2-methyl-fluorenyl)) zirconium dichloride;
dimethylsilandiyl(3-(2-hydroxy)-ethoxy-cyclopentadienyl)(9-(2-methyl-fluorenyl)) zirconium dichloride;
dimethylsilandiylbis(2-(2-hydroxy-ethyl-(dimethyl)silyl)-cyclopentadienyl) zirconium dichloride;
dimethylsilandiylbis(3-(2-hydroxy-ethyl-(dimethyl)silyl)-cyclopentadienyl) zirconium dichloride;
dimethylsilandiyl(2-(2-hydroxy-ethyl-(dimethyl)silyl)-cyclopentadienyl)(1-indenyl) zirconium dichloride;
dimethylsilandiyl(3-(2-hydroxy-ethyl-(dimethyl)silyl)-cyclopentadienyl)(1-indenyl) zirconium dichloride;
dimethylsilandiyl(2-(2-hydroxy-ethyl-(dimethyl)silyl)-cyclopentadienyl)(1-(2-methyl-indenyl)) zirconium dichloride;
dimethylsilandiyl(3-(2-hydroxy-ethyl-(dimethyl)silyl)-cyclopentadienyl)(1-(2-methyl-indenyl)) zirconium dichloride;
dimethylsilandiyl(2-(2-hydroxy-ethyl-(dimethyl)silyl)-cyclopentadienyl)(9-fluorenyl) zirconium dichloride;
dimethylsilandiyl(3-(2-hydroxy-ethyl-(dimethyl)silyl)-cyclopentadienyl)(9-fluorenyl) zirconium dichloride;
dimethylsilandiyl(2-(2-hydroxy-ethyl-(dimethyl)silyl)-cyclopentadienyl)(9-(2-methylfluorenyl)) zirconium dichloride;
dimethylsilandiyl(3-(2-hydroxy-ethyl-(dimethyl)silyl)-cyclopentadienyl)(9-(2-methylfluorenyl)) zirconium dichloride;
dimethylsilandiyl(3-(2-hydroxy-(dimethyl)silyl)-cyclopentadienyl)(1-indenyl) zirconium dichloride;
dimethylsilandiyl(3-(2-hydroxy-(dimethyl)silyl)-cyclopentadienyl)(1-(2-methylbenzoindenyl)) zirconium dichloride;
dimethylsilandiylbis(3-(2-hydroxy-(dimethyl)silyl-1-indenyl) zirconium dichloride;
dimethylsilandiyl(3-(2-hydroxy-(dimethyl)silyl-1-indenyl) (1-indenyl)zirconium dichloride;

isopropylidenebis(2-(2-hydroxyethyl)-cyclopentadienyl) zirconium dichloride;
isopropylidenebis(3-(2-hydroxyethyl)-cyclopentadienyl) zirconium dichloride;
isopropylidene(2-(2-hydroxyethyl)-cyclopentadienyl)(1-indenyl) zirconium dichloride;
isopropylidene(3-(2-hydroxyethyl)-cyclopentadienyl)(1-indenyl) zirconium dichloride;
isopropylidene(2-(2-hydroxyethyl)-cyclopentadienyl)(1-(2-methyl-indenyl)) zirconium dichloride;
isopropylidene(3-(2-hydroxyethyl)-cyclopentadienyl)(1-(2-methyl-indenyl)) zirconium dichloride;
isopropylidene(2-(2-hydroxyethyl)-cyclopentadienyl)(9-fluorenyl) zirconium dichloride;
isopropylidene(3-(2-hydroxyethyl)-cyclopentadienyl)(9-fluorenyl) zirconium dichloride;
isopropylidene(2-(2-hydroxyethyl)-cyclopentadienyl)(9-(2-methyl-fluorenyl)) zirconium dichloride;
isopropylidene(3-(2-hydroxyethyl)-cyclopentadienyl)(9-(2-methyl-fluorenyl)) zirconium dichloride;
isopropylidene(3-(2-hydroxyethyl)-cyclopentadienyl)(1-(2methylbenzoindenyl)) zirconium dichloride;
isopropylidenebis(2-(3-hydroxypropyl)-cyclopentadienyl) zirconium dichloride;
isopropylidenebis(3-(3-hydroxyropyl)-cyclopentadienyl) zirconium dichloride;
isopropylidene(2-(3-hydroxypropyl)-cyclopentadienyl)(1-indenyl) zirconium dichloride;
isopropylidene(3-(3-hydroxyropyl)-cyclopentadienyl)(1-indenyl) zirconium dichloride;
isopropylidene(2-(3-hydroxypropyl)-cyclopentadienyl)(1-(2-methyl-indenyl)) zirconium dichloride;
isopropylidene(3-(3-hydroxyropyl)-cyclopentadienyl)(1-(2-methyl-indenyl)) zirconium dichloride;
isopropylidene(2-(3-hydroxypropyl)-cyclopentadienyl)(9-fluorenyl) zirconium dichloride;
isopropylidene(3-(3-hydroxyropyl)-cyclopentadienyl)(9-fluorenyl) zirconium dichloride;
isopropylidene(2-(3-hydroxypropyl)-cyclopentadienyl)(9-(2-methyl-fluorenyl)) zirconium dichloride;
isopropylidene(3-(3-hydroxyropyl)-cyclopentadienyl)(9-(2-methyl-fluorenyl)) zirconium dichloride;
isopropylidene(3-(3-hydroxyropyl)-cyclopentadienyl)(1-(2methylbenzoindenyl)) zirconium dichloride;
isopropylidenebis(2-(2-hydroxy-ethoxy)-cyclopentadienyl) zirconium dichloride;
isopropylidenebis(3-(2-hydroxy-ethoxy)-cyclopentadienyl) zirconium dichloride;
isopropylidene(2-(2-hydroxy-ethoxy)-cyclopentadienyl)(1-indenyl) zirconium dichloride;
isopropylidene(3-(2-hydroxy-ethoxy)-cyclopentadienyl)(1-indenyl) zirconium dichloride;
isopropylidene(2-(2-hydroxy-ethoxy)-cyclopentadienyl)(1-(2-methyl-indenyl)) zirconium dichloride;
isopropylidene(3-(2-hydroxy-ethoxy)-cyclopentadienyl)(1-(2-methyl-indenyl)) zirconium dichloride;
isopropylidene(2-(2-hydroxy-ethoxy)-cyclopentadienyl)(9-fluorenyl) zirconium dichloride;
isopropylidene(3-(2-hydroxy-ethoxy)-cyclopentadienyl)(9-fluorenyl) zirconium dichloride;
isopropylidene(2-(2-hydroxy-ethoxy)-cyclopentadienyl)(9-(2-methyl-fluorenyl)) zirconium dichloride;
isopropylidene(3-(2-hydroxy-ethoxy)-cyclopentadienyl)(9-(2-methyl-fluorenyl)) zirconium dichloride;
isopropylidenebis(2-(2-hydroxy-ethyl-(dimethyl)silyl)-cyclopentadienyl) zirconium dichloride;
isopropylidenebis(3-(2-hydroxy-ethyl-(dimethyl)silyl)-cyclopentadienyl) zirconium dichloride;
isopropylidene(2-(2-hydroxy-ethyl-(dimethyl)silyl)-cyclopentadienyl)(1-indenyl) zirconium dichloride;
isopropylidene(3-(2-hydroxy-ethyl-(dimethyl)silyl)-cyclopentadienyl)(1-indenyl) zirconium dichloride;
isopropylidene(2-(2-hydroxy-ethyl-(dimethyl)silyl)-cyclopentadienyl)(1-(2-methyl-indenyl)) zirconium dichloride;
isopropylidene(3-(2-hydroxy-ethyl-(dimethyl)silyl)-cyclopentadienyl)(1-(2-methyl-indenyl)) zirconium dichloride;
isopropylidene(2-(2-hydroxy-ethyl-(dimethyl)silyl)-cyclopentadienyl)(9-fluorenyl) zirconium dichloride;
isopropylidene(3-(2-hydroxy-ethyl-(dimethyl)silyl)-cyclopentadienyl)(9-fluorenyl) zirconium dichloride;
isopropylidene(2-(2-hydroxy-ethyl-(dimethyl)silyl)-cyclopentadienyl)(9-(2-methylfluorenyl)) zirconium dichloride;
isopropylidene(3-(2-hydroxy-ethyl-(dimethyl)silyl)-cyclopentadienyl)(9-(2-methylfluorenyl)) zirconium dichloride;
isopropylidene(2-(2-hydroxy-(dimethyl)silyl)-cyclopentadienyl)(1-indenyl) zirconium dichloride;
isopropylidene(2-(2-hydroxy-(dimethyl)silyl)-cyclopentadienyl)(1-(2-methylbenzoindenyl)) zirconium dichloride;
ethylidenebis(2-(2-hydroxyethyl)-cyclopentadienyl) zirconium dichloride;
ethylidenebis(3-(2-hydroxyethyl)-cyclopentadienyl) zirconium dichloride;
ethylidene(3-(2-hydroxyethyl)-cyclopentadienyl) (cyclopentadienyl) zirconium dichloride;
ethylidene(2-(2-hydroxyethyl)-cyclopentadienyl)(1-indenyl) zirconium dichloride;
ethylidene(3-(2-hydroxyethyl)-cyclopentadienyl)(1-indenyl) zirconium dichloride;
ethylidene(2-(2-hydroxyethyl)-cyclopentadienyl)(1-(2-methyl-indenyl)) zirconium dichloride;
ethylidene(3-(2-hydroxyethyl)-cyclopentadienyl)(1-(2-methyl-indenyl)) zirconium dichloride;
ethylidene(2-(2-hydroxyethyl)-cyclopentadienyl)(9-fluorenyl) zirconium dichloride;
ethylidene(3-(2-hydroxyethyl)-cyclopentadienyl)(9-fluorenyl) zirconium dichloride;
ethylidene(2-(2-hydroxyethyl)-cyclopentadienyl)(9-(2-methyl-fluorenyl)) zirconium dichloride;
ethylidene(3-(2-hydroxyethyl)-cyclopentadienyl)(9-(2-methyl-fluorenyl)) zirconium dichloride;
ethylidenebis(2-(3-hydroxypropyl)-cyclopentadienyl) zirconium dichloride;
ethylidenebis(3-(3-hydroxyropyl)-cyclopentadienyl) zirconium dichloride;
ethylidene(3-(3-hydroxyropyl)-cyclopentadienyl) (cyclopentadienyl) zirconium dichloride;
ethylidene(2-(3-hydroxypropyl)-cyclopentadienyl)(1-indenyl) zirconium dichloride;
ethylidene(3-(3-hydroxyropyl)-cyclopentadienyl)(1-indenyl) zirconium dichloride;
ethylidene(2-(3-hydroxypropyl)-cyclopentadienyl)(1-(2-methyl-indenyl)) zirconium dichloride;
ethylidene(3-(3-hydroxyropyl)-cyclopentadienyl)(1-(2-methyl-indenyl)) zirconium dichloride;
ethylidene(2-(3-hydroxypropyl)-cyclopentadienyl)(9-fluorenyl) zirconium dichloride;
ethylidene(3-(3-hydroxyropyl)-cyclopentadienyl)(9-fluorenyl) zirconium dichloride;
ethylidene(2-(3-hydroxypropyl)-cyclopentadienyl)(9-(2-methyl-fluorenyl)) zirconium dichloride;
ethylidene(3-(3-hydroxyropyl)-cyclopentadienyl)(9-(2-methyl-fluorenyl)) zirconium dichloride;
ethylidenebis(2-(2-hydroxy-ethoxy)-cyclopentadienyl) zirconium dichloride;
ethylidenebis(3-(2-hydroxy-ethoxy)-cyclopentadienyl) zirconium dichloride;
ethylidene(2-(2-hydroxy-ethoxy)-cyclopentadienyl)(1-indenyl) zirconium dichloride;
ethylidene(3-(2-hydroxy-ethoxy)-cyclopentadienyl)(1-indenyl) zirconium dichloride;
ethylidene(2-(2-hydroxy-ethoxy)-cyclopentadienyl)(1-(2-methyl-indenyl)) zirconium dichloride;
ethylidene(3-(2-hydroxy-ethoxy)-cyclopentadienyl)(1-(2-methyl-indenyl)) zirconium dichloride;
ethylidene(2-(2-hydroxy-ethoxy)-cyclopentadienyl)(9-fluorenyl) zirconium dichloride;
ethylidene(3-(2-hydroxy-ethoxy)-cyclopentadienyl)(9-fluorenyl) zirconium dichloride;
ethylidene(2-(2-hydroxy-ethoxy)-cyclopentadienyl)(9-(2-methyl-fluorenyl)) zirconium dichloride;
ethylidene(3-(2-hydroxy-ethoxy)-cyclopentadienyl)(9-(2-methyl-fluorenyl)) zirconium dichloride;
ethylidenebis(2-(2-hydroxy-ethyl-(dimethyl)silyl)-cyclopentadienyl) zirconium dichloride;
ethylidenebis(3-(2-hydroxy-ethyl-(dimethyl)silyl)-cyclopentadienyl) zirconium dichioride;
ethylidene(2-(2-hydroxy-ethyl-(dimethyl)silyl)-cyclopentadienyl)(1-indenyl) zirconium dichloride;
ethylidene(3-(2-hydroxy-ethyl-(dimethyl)silyl)-cyclopentadienyl)(1-indenyl) zirconium dichloride;
ethylidene(2-(2-hydroxy-ethyl-(dimethyl)silyl)-cyclopentadienyl)(1-(2-methyl-indenyl)) zirconium dichloride;
ethylidene(3-(2-hydroxy-ethyl-(dimethyl)silyl)-cyclopentadienyl)(1-(2-methyl-indenyl)) zirconium dichloride;
ethylidene(2-(2-hydroxy-ethyl-(dimethyl)silyl)-cyclopentadienyl)(9-fluorenyl) zirconium dichloride;
ethylidene(3-(2-hydroxy-ethyl-(dimethyl)silyl)-cyclopentadienyl)(9-fluorenyl) zirconium dichloride;
ethylidene(2-(2-hydroxy-ethyl-(dimethyl)silyl)-cyclopentadienyl)(9-(2-methyl-fluorenyl)) zirconium dichloride;
ethylidene(3-(2-hydroxy-ethyl-(dimethyl)silyl)-cyclopentadienyl)(9-(2-methyl-fluorenyl)) zirconium dichloride;
dimethylsilandiylbis(1-(2-(2-hydroxyethyl)-indenyl)) zirconium dichloride;
dimethylsilandiylbis(1-(3-(2-hydroxyethyl)-indenyl)) zirconium dichloride;
dimethylsilandiyl(1-(2-(2-hydroxyethyl)-indenyl))(1-indenyl) zirconium dichloride;
dimethylsilandiyl(1-(3-(2-hydroxyethyl)-indenyl))(1-indenyl) zirconium dichloride;
dimethylsilandiyl(1-(2-(2-hydroxyethyl)-indenyl))(1-(2-methyl-indenyl)) zirconium dichloride;
dimethylsilandiyl(1-(3-(2-hydroxyethyl)-indenyl))(1-(2-methyl-indenyl)) zirconium dichloride;
dimethylsilandiyl(1-(2-(2-hydroxyethyl)-indenyl))(9-fluorenyl) zirconium dichloride;
dimethylsilandiyl(1-(3-(2-hydroxyethyl)-indenyl))(9-fluorenyl) zirconium dichloride;
dimethylsilandiyl(1-(2-(2-hydroxyethyl)-indenyl))(9-(2-methyl-fluorenyl)) zirconium dichloride;
dimethylsilandiyl(1-(3-(2-hydroxyethyl)-indenyl))(9-(2-methyl-fluorenyl)) zirconium dichloride;
dimethylsilandiylbis(1-(2-(3-hydroxypropyl)-indenyl)) zirconium dichloride;
dimethylsilandiylbis(1-(3-(3-hydroxyropyl)-indenyl)) zirconium dichloride;
dimethylsilandiyl(1-(2-(3-hydroxypropyl)-indenyl))(1-indenyl) zirconium dichloride;
dimethylsilandiyl(1-(3-(3-hydroxyropyl)-indenyl))(1-indenyl) zirconium dichloride;
dimethylsilandiyl(1-(2-(3-hydroxypropyl)-indenyl))(1-(2-methyl-indenyl)) zirconium dichloride;
dimethylsilandiyl(1-(3-(3-hydroxyropyl)-indenyl))(1-(2-methyl-indenyl)) zirconium dichloride;
dimethylsilandiyl(1-(2-(3-hydroxypropyl)-indenyl))(9-fluorenyl) zirconium dichloride;
dimethylsilandiyl(1-(3-(3-hydroxyropyl)-indenyl))(9-fluorenyl) zirconium dichloride;
dimethylsilandiyl(1-(2-(3-hydroxypropyl)-indenyl))(9-(2-methyl-fluorenyl)) zirconium dichloride;
dimethylsilandiyl(1-(3-(3-hydroxyropyl)-indenyl))(9-(2-methyl-fluorenyl)) zirconium dichloride;
dimethylsilandiylbis(1-(2-(2-hydroxy-ethoxy-indenyl)) zirconium dichloride;
dimethylsilandiylbis(1-(3-(2-hydroxy-ethoxy-indenyl)) zirconium dichloride;
dimethylsilandiyl(1-(2-(2-hydroxy-ethoxy-indenyl))(1-indenyl) zirconium dichloride;
dimethylsilandiyl(1-(3-(2-hydroxy-ethoxy-indenyl))(1-indenyl) zirconium dichloride;
dimethylsilandiyl(1-(2-(2-hydroxy-ethoxy-indenyl))(1-(2-methyl-indenyl)) zirconium dichloride;
dimethylsilandiyl(1-(3-(2-hydroxy-ethoxy-indenyl))(1-(2-methyl-indenyl)) zirconium dichloride;
dimethylsilandiyl(1-(2-(2-hydroxy-ethoxy-indenyl))(9-fluorenyl) zirconium dichloride;
dimethylsilandiyl(1-(3-(2-hydroxy-ethoxy-indenyl))(9-fluorenyl) zirconium dichloride;
dimethylsilandiyl(1-(2-(2-hydroxy-ethoxy-indenyl))(9-(2-methyl-fluorenyl)) zirconium dichloride;
dimethylsilandiyl(1-(3-(2-hydroxy-ethoxy-indenyl))(9-(2-methyl-fluorenyl)) zirconium dichloride;
dimethylsilandiylbis(1-(2-(2-hydroxy-ethyl-(dimethyl)silyl-indenyl)) zirconium dichloride;
dimethylsilandiylbis(1-(3-(2-hydroxy-ethyl-(dimethyl)silyl-indenyl)) zirconium dichloride;
dimethylsilandiyl(1-(2-(2-hydroxy-ethyl-(dimethyl)silyl-indenyl))(1-indenyl) zirconium dichloride;
dimethylsilandiyl(1-(3-(2-hydroxy-ethyl-(dimethyl)silyl-indenyl))(1-indenyl) zirconium dichloride;
dimethylsilandiyl(1-(2-(2-hydroxy-ethyl-(dimethyl)silyl-indenyl))(1-(2-methyl-indenyl)) zirconium dichloride;
dimethylsilandiyl(1-(3-(2-hydroxy-ethyl-(dimethyl)silyl-indenyl))(1-(2-methyl-indenyl)) zirconium dichloride;
dimethylsilandiyl(1-(2-(2-hydroxy-ethyl-(dimethyl)silyl-indenyl))(9-fluorenyl) zirconium dichloride;
dimethylsilandiyl(1-(3-(2-hydroxy-ethyl-(dimethyl)silyl-indenyl))(9-fluorenyl) zirconium dichloride;
dimethylsilandiyl(1-(2-(2-hydroxy-ethyl-(dimethyl)silyl-indenyl))(9-(2-methyl-fluorenyl)) zirconium dichloride;
dimethylsilandiyl(1-(3-(2-hydroxy-ethyl-(dimethyl)silyl-indenyl))(9-(2-methyl-fluorenyl)) zirconium dichloride;
isopropylidenebis(1-(2-(2-hydroxyethyl)-indenyl)) zirconium dichloride;
isopropylidenebis(1-(3-(2-hydroxyethyl)-indenyl)) zirconium dichloride;
isopropylidene(1-(2-(2-hydroxyethyl)-indenyl))(1-indenyl) zirconium dichloride;
isopropylidene(1-(3-(2-hydroxyethyl)-indenyl))(1-indenyl) zirconium dichloride;
isopropylidene(1-(2-(2-hydroxyethyl)-indenyl))(1-(2-methyl-indenyl)) zirconium dichloride;
isopropylidene(1-(3-(2-hydroxyethyl)-indenyl))(1-(2-methyl-indenyl)) zirconium dichloride;
isopropylidene(1-(2-(2-hydroxyethyl)-indenyl))(9-fluorenyl) zirconium dichloride;
isopropylidene(1-(3-(2-hydroxyethyl)-indenyl))(9-fluorenyl) zirconium dichloride;
isopropylidene(1-(2-(2-hydroxyethyl)-indenyl))(9-(2-methyl-fluorenyl)) zirconium dichloride;
isopropylidene(1-(3-(2-hydroxyethyl)-indenyl))(9-(2-methyl-fluorenyl)) zirconium dichloride;
isopropylidenebis(1-(2-(3-hydroxypropyl)-indenyl)) zirconium dichloride;
isopropylidenebis(1-(3-3-hydroxyropyl-indenyl)) zirconium dichloride;
isopropylidene(1-(2-(3-hydroxypropyl)-indenyl))(1-indenyl) zirconium dichloride;
isopropylidene(1-(3-3-hydroxyropyl-indenyl))(1-indenyl) zirconium dichloride;
isopropylidene(1-(2-(3-hydroxypropyl)-indenyl))(1-(2-methyl-indenyl)) zirconium dichloride;
isopropylidene(1-(3-3-hydroxyropyl-indenyl))(1-(2-methyl-indenyl)) zirconium dichloride;
isopropylidene(1-(2-(3-hydroxypropyl)-indenyl))(9-fluorenyl) zirconium dichloride;
isopropylidene(1-(3-3-hydroxyropyl-indenyl))(9-fluorenyl) zirconium dichloride;
isopropylidene(1-(2-(3-hydroxypropyl)-indenyl))(9-(2-methyl-fluorenyl)) zirconium dichloride;
isopropylidene(1-(3-3-hydroxyropyl-indenyl))(9-(2-methyl-fluorenyl)) zirconium dichloride;
isopropylidenebis(1-(2-(2-hydroxy-ethoxy-indenyl)) zirconium dichloride;
isopropylidenebis(1-(3-(2-hydroxy-ethoxy-indenyl)) zirconium dichloride;
isopropylidene(1-(2-(2-hydroxy-ethoxy-indenyl))(1-indenyl) zirconium dichloride;
isopropylidene(1-(3-(2-hydroxy-ethoxy-indenyl))(1-indenyl) zirconium dichloride;
isopropylidene(1-(2-(2-hydroxy-ethoxy-indenyl))(1-(2-methyl-indenyl)) zirconium dichloride;
isopropylidene(1-(3-(2-hydroxy-ethoxy-indenyl))(1-(2-methyl-indenyl)) zirconium dichloride;
isopropylidene(1-(2-(2-hydroxy-ethoxy-indenyl))(9-fluorenyl) zirconium dichloride;
isopropylidene(1-(3-(2-hydroxy-ethoxy-indenyl))(9-fluorenyl) zirconium dichloride;
isopropylidene(1-(2-(2-hydroxy-ethoxy-indenyl))(9-(2-methyl-fluorenyl)) zirconium dichloride;
isopropylidene(1-(3-(2-hydroxy-ethoxy-indenyl))(9-(2-methyl-fluorenyl)) zirconium dichloride;
isopropylidenebis(1-(2-(2-hydroxy-ethyl-(dimethyl)silyl-indenyl)) zirconium dichloride;
isopropylidenebis(1-(3-(2-hydroxy-ethyl-(dimethyl)silyl-indenyl)) zirconium dichloride;
isopropylidene(1-(2-(2-hydroxy-ethyl-(dimethyl)silyl-indenyl))(1-indenyl) zirconium dichloride;
isopropylidene(1-(3-(2-hydroxy-ethyl-(dimethyl)silyl-indenyl))(1-indenyl) zirconium dichloride;
isopropylidene(1-(2-(2-hydroxy-ethyl-(dimethyl)silyl-indenyl))(1-(2-methyl-indenyl)) zirconium dichloride;
isopropylidene(1-(3-(2-hydroxy-ethyl-(dimethyl)silyl-indenyl))(1-(2-methyl-indenyl)) zirconium dichloride;
isopropylidene(1-(2-(2-hydroxy-ethyl-(dimethyl)silyl-indenyl))(9-fluorenyl) zirconium dichloride;
isopropylidene(1-(3-(2-hydroxy-ethyl-(dimethyl)silyl-indenyl))(9-fluorenyl) zirconium dichloride;
isopropylidene(1-(2-(2-hydroxy-ethyl-(dimethyl)silyl-indenyl))(9-(2-methyl-fluorenyl)) zirconium dichloride;
isopropylidene(1-(3-(2-hydroxy-ethyl-(dimethyl)silyl-indenyl))(9-(2-methyl-fluorenyl)) zirconium dichloride;
ethylidenebis(1-(2-(2-hydroxyethyl)-indenyl)) zirconium dichloride;
ethylidenebis(1-(3-(2-hydroxyethyl)-indenyl)) zirconium dichloride;
ethylidene(1-(2-(2-hydroxyethyl)-indenyl))(1-indenyl) zirconium dichloride;
ethylidene(1-(3-(2-hydroxyethyl)-indenyl))(1-indenyl) zirconium dichloride;
ethylidene(1-(2-(2-hydroxyethyl)-indenyl))(1-(2-methyl-indenyl)) zirconium dichloride;
ethylidene(1-(3-(2-hydroxyethyl)-indenyl))(1-(2-methyl-indenyl)) zirconium dichloride;
ethylidene(1-(2-(2-hydroxyethyl)-indenyl))(9-fluorenyl) zirconium dichloride;
ethylidene(1-(3-(2-hydroxyethyl)-indenyl))(9-fluorenyl) zirconium dichloride;
ethylidene(1-(2-(2-hydroxyethyl)-indenyl))(9-(2-methyl-fluorenyl)) zirconium dichloride;
ethylidene(1-(3-(2-hydroxyethyl)-indenyl))(9-(2-methyl-fluorenyl)) zirconium dichloride;
ethylidenebis(1-(2-(3-hydroxypropyl)-indenyl)) zirconium dichloride;
ethylidenebis(1-(3-3-hydroxyropyl-indenyl)) zirconium dichloride;
ethylidene(1-(2-(3-hydroxypropyl)-indenyl))(1-indenyl) zirconium dichloride;
ethylidene(1-(3-3-hydroxyropyl-indenyl))(1-indenyl) zirconium dichloride;
ethylidene(1-(2-(3-hydroxypropyl)-indenyl))(1-(2-methyl-indenyl)) zirconium dichloride;
ethylidene(1-(3-3-hydroxyropyl-indenyl))(1-(2-methyl-indenyl)) zirconium dichloride;
ethylidene(1-(2-(3-hydroxypropyl)-indenyl))(9-fluorenyl) zirconium dichloride;
ethylidene(1-(3-3-hydroxyropyl-indenyl))(9-fluorenyl) zirconium dichloride; dichloride;
ethylidenebis(1-(2-(2-hydroxy-ethoxy-indenyl)) zirconium dichloride;
ethylidenebis(1-(3-(2-hydroxy-ethoxy-indenyl)) zirconium dichloride;
ethylidene(1-(2-(2-hydroxy-ethoxy-indenyl))(1-indenyl) zirconium dichloride;
ethylidene(1-(3-(2-hydroxy-ethoxy-indenyl))(1-indenyl) zirconium dichloride;
ethylidene(1-(2-(2-hydroxy-ethoxy-indenyl))(1-(2-methyl-indenyl)) zirconium dichloride;
ethylidene(1-(3-(2-hydroxy-ethoxy-indenyl))(1-(2-methyl-indenyl)) zirconium dichloride;
ethylidene(1-(2-(2-hydroxy-ethoxy-indenyl))(9-fluorenyl) zirconium dichloride;
ethylidene(1-(3-(2-hydroxy-ethoxy-indenyl))(9-fluorenyl) zirconium dichloride;
ethylidene(1-(2-(2-hydroxy-ethoxy-indenyl))(9-(2-methyl-fluorenyl)) zirconium dichloride;
ethylidene(1-(3-(2-hydroxy-ethoxy-indenyl))(9-(2-methyl-fluorenyl)) zirconium dichloride;
ethylidenebis(1-(2-(2-hydroxy-ethyl-(dimethyl)silyl-indenyl)) zirconium dichloride;
ethylidenebis(1-(3-(2-hydroxy-ethyl-(dimethyl)silyl-indenyl)) zirconium dichloride;
ethylidene(1-(2-(2-hydroxy-ethyl-(dimethyl)silyl-indenyl))(1-indenyl) zirconium dichloride;
ethylidene(1-(3-(2-hydroxy-ethyl-(dimethyl)silyl-indenyl))(1-indenyl) zirconium dichloride;
ethylidene(1-(2-(2-hydroxy-ethyl-(dimethyl)silyl-indenyl))(1-(2-methyl-indenyl)) zirconium dichloride;
ethylidene(1-(3-(2-hydroxy-ethyl-(dimethyl)silyl-indenyl))(1-(2-methyl-indenyl)) zirconium dichloride;
ethylidene(1-(2-(2-hydroxy-ethyl-(dimethyl)silyl-indenyl))(9-fluorenyl) zirconium dichloride;
ethylidene(1-(3-(2-hydroxy-ethyl-(dimethyl)silyl-indenyl))(9-fluorenyl) zirconium dichloride;
ethylidene(1-(2-(2-hydroxy-ethyl-(dimethyl)silyl-indenyl))(9-(2-methyl-fluorenyl)) zirconium dichloride;
ethylidene(1-(3-(2-hydroxy-ethyl-(dimethyl)silyl-indenyl))(9-(2-methyl-fluorenyl)) zirconium dichloride;
dimethylsilylenebis(9-(1-(2-hydroxyethyl)-fluorenyl)) zirconium dichloride;
dimethylsilylene(9-(1-(2-hydroxyethyl)-fluorenyl))(cyclopentadienyl) zirconium dichloride;
dimethylsilylene(9-(1-(2-hydroxyethyl)-fluorenyl))(1-(2-methyl-indenyl)) zirconium dichloride;
dimethylsilylene(9-(1-(2-hydroxyethyl)-fluorenyl))(1-indenyl) zirconium dichloride;
dimethylsilylene(9-(1-(2-hydroxyethyl)-fluorenyl))(9-(2-methyl-fluorenyl)) zirconium dichloride;
dimethylsilylenebis(9-(1-(3-hydroxyropyl)- fluorenyl)) zirconium dichloride;
dimethylsilylene(9-(1-(3-hydroxyropyl)-fluorenyl))(9-fluorenyl) zirconium dichloride;
dimethylsilylene(9-(1-(3-hydroxyropyl)-fluorenyl))(1-(2-methyl-indenyl)) zirconium dichloride;
dimethylsilylene(9-(1-(3-hydroxyropyl)-fluorenyl))(1-indenyl) zirconium dichloride;
dimethylsilylene(9-(1-(3-hydroxyropyl)-fluorenyl))(9-(2-methyl-fluorenyl)) zirconium dichloride;
dimethylsilylenebis(9-(1-(2-hydroxy-ethoxy)-fluorenyl)) zirconium dichloride;
dimethylsilylene(9-(1-(2-hydroxy-ethoxy)-fluorenyl))(9-fluorenyl) zirconium dichloride;
dimethylsilylene(9-(1-(2-hydroxy-ethoxy)-fluorenyl))(1-(2-methyl-indenyl)) zirconium dichloride;
dimethylsilylene(9-(1-(2-hydroxy-ethoxy)-fluorenyl))(1-indenyl) zirconium dichloride;
dimethylsilylene(9-(1-(2-hydroxy-ethoxy)-fluorenyl))(9-(2-methyl-fluorenyl)) zirconium dichloride;
dimethylsilylenebis(9-(1-(2-hydroxy-ethyl-(dimethyl)silyl-fluorenyl)) zirconium dichloride;
dimethylsilylene(9-(1-(2-hydroxy-ethyl-(dimethyl)silyl-fluorenyl))(9-fluorenyl) zirconium dichloride;
dimethylsilylene(9-(1-(2-hydroxy-ethyl-(dimethyl)silyl-fluorenyl))(1-(2-methyl-indenyl)) zirconium dichloride;
dimethylsilylene(9-(1-(2-hydroxy-ethyl-(dimethyl)silyl-fluorenyl))(1-indenyl) zirconium dichloride;
dimethylsilylene(9-(1-(2-hydroxy-ethyl-(dimethyl)silyl-fluorenyl))(9-(2-methyl-fluorenyl)) zirconium dichloride;
isopropylidenebis(9-(1-(2-hydroxyethyl)-fluorenyl)) zirconium dichloride;
isopropylidene(9-(1-(2-hydroxyethyl)-fluorenyl))(9-fluorenyl) zirconium dichloride;
isopropylidene(9-(1-(2-hydroxyethyl)-fluorenyl))(1-(2-methyl-indenyl)) zirconium dichloride;
isopropylidene(9-(1-(2-hydroxyethyl)-fluorenyl))(1-indenyl) zirconium dichloride;
isopropylidene(9-(1-(2-hydroxyethyl)-fluorenyl))(9-(2-methyl-fluorenyl)) zirconium dichloride;
isopropylidenebis(9-(1-(3-hydroxyropyl)-fluorenyl)) zirconium dichloride;
isopropylidene(9-(1-(3-hydroxyropyl)-fluorenyl))(9-fluorenyl) zirconium dichloride;
isopropylidene(9-(1-(3-hydroxyropyl)-fluorenyl))(1-(2-methyl-indenyl)) zirconium dichloride;
isopropylidene(9-(1-(3-hydroxyropyl)-fluorenyl))(1-indenyl) zirconium dichloride;
isopropylidene(9-(1-(3-hydroxyropyl)-fluorenyl))(9-(2-methyl-fluorenyl)) zirconium dichloride;
isopropylidenebis(9-(1-(2-hydroxy-ethoxy)-fluorenyl)) zirconium dichloride;
isopropylidene(9-(1-(2-hydroxy-ethoxy)-fluorenyl))(9-fluorenyl) zirconium dichloride;
isopropylidene(9-(1-(2-hydroxy-ethoxy)-fluorenyl))(1-(2-methyl-indenyl)) zirconium dichloride;
isopropylidene(9-(1-(2-hydroxy-ethoxy)-fluorenyl))(1-indenyl) zirconium dichloride;
isopropylidene(9-(1-(2-hydroxy-ethoxy)-fluorenyl))(9-(2-methyl-fluorenyl)) zirconium dichloride;
isopropylidenebis(9-(1-(2-hydroxy-ethyl-(dimethyl)silyl-fluorenyl)) zirconium dichloride;
isopropylidene(9-(1-(2-hydroxy-ethyl-(dimethyl)silyl-fluorenyl))(9-fluorenyl) zirconium dichloride;
isopropylidene(9-(1-(2-hydroxy-ethyl-(dimethyl)silyl-fluorenyl))(1-(2-methyl-indenyl)) zirconium dichloride;
isopropylidene(9-(1-2-hydroxy-ethyl-(dimethyl)silyl-fluorenyl))(1-indenyl) zirconium dichloride;
isopropylidene(9-(1-2-hydroxy-ethyl-(dimethyl)silyl-fluorenyl))(9-(2-methyl-fluorenyl)) zirconium dichloride;
ethylidenebis(9-(1-(2-hydroxyethyl-fluorenyl)) zirconium dichloride;
ethylidene(9-(1-(2-hydroxyethyl-fluorenyl))(9-fluorenyl) zirconium dichloride;
ethylidene(9-(1-(2-hydroxyethyl-fluorenyl))(1-(2-methyl-indenyl)) zirconium dichloride;
ethylidene(9-(1-(2-hydroxyethyl-fluorenyl))(1-indenyl) zirconium dichloride;
ethylidene(9-(1-(2-hydroxyethyl-fluorenyl))(9-(2-methyl-fluorenyl)) zirconium dichloride;
ethylidenebis(9-(1-(3-hydroxyropyl-fluorenyl)) zirconium dichloride;
ethylidene(9-(1-(3-hydroxyropyl-fluorenyl))(9-fluorenyl) zirconium dichloride;
ethylidene(9-(1-(3-hydroxyropyl-fluorenyl))(1-(2-methyl-indenyl)) zirconium dichloride;
ethylidene(9-(1-(3-hydroxyropyl-fluorenyl))(1-indenyl) zirconium dichloride;
ethylidene(9-(1-(3-hydroxyropyl-fluorenyl))(9-(2-methyl-fluorenyl)) zirconium dichloride;
ethylidenebis(9-(1-(2-hydroxy-ethoxy-fluorenyl)) zirconium dichloride;
ethylidene(9-(1-(2-hydroxy-ethoxy-fluorenyl))(9-fluorenyl) zirconium dichloride;
ethylidene(9-(1-(2-hydroxy-ethoxy-fluorenyl))(1-(2-methyl-indenyl)) zirconium dichloride;
ethylidene(9-(1-(2-hydroxy-ethoxy-fluorenyl))(1-indenyl) zirconium dichloride;
ethylidene(9-(1-(2-hydroxy-ethoxy-fluorenyl))(9-(2-methyl-fluorenyl)) zirconium dichloride;
ethylidenebis(9-(1-(2-hydroxy-ethyl-(dimethyl)silyl-fluorenyl)) zirconium dichloride;
ethylidene(9-(1-(2-hydroxy-ethyl-(dimethyl)silyl-fluorenyl))(9-fluorenyl) zirconium dichloride;
ethylidene(9-(1-(2-hydroxy-ethyl-(dimethyl)silyl-fluorenyl))(1-(2-methyl-indenyl)) zirconium dichloride;
ethylidene(9-(1-(2-hydroxy-ethyl-(dimethyl)silyl-fluorenyl))(1-indenyl) zirconium dichloride;
ethylidene(9-(1-(2-hydroxy-ethyl-(dimethyl)silyl-fluorenyl))(9-(2-methyl-fluorenyl)) zirconium dichloride;
2-hydroxyethyl(methyl)silandiylbis(cyclopentadienyl) zirconium dichloride;
2-hydroxyethyl(methyl)silandiylbis(9-fluorenyl) zirconium dichloride;
2-hydroxyethyl(methyl)silandiyl(cyclopentadienyl)(1-indenyl) zirconium dichloride;
2-hydroxyethyl(methyl)silandiyl(cyclopentadienyl)(1-(2-methyl-indenyl)) zirconium dichloride;
2-hydroxyethyl(methyl)silandiyl(cyclopentadienyl)(9-fluorenyl) zirconium dichloride;
2-hydroxyethyl(methyl)silndiyl(cyclopentadienyl)(9-(2-methyl-fluorenyl)) zirconium dichloride;
2-hydroxyethyl(methyl)silandiylbis(1-indenyl) zirconium dichloride;
2-hydroxyethyl(methyl)silandiyl(cyclopentadienyl)(1-(2-methylbenzoindenyl)) zirconium dichloride;
2-hydroxyethyl(methyl)silandiylbis(1-(2-methylbenzoindenyl)) zirconium dichloride;
3-hydroxyropyl(methyl)silandiylbis(cyclopentadienyl) zirconium dichloride;
3-hydroxyropyl(methyl)silandiylbis(9-fluorenyl) zirconium dichloride;
3-hydroxyropyl(methyl)silandiyl(cyclopentadienyl)(1-indenyl) zirconium dichloride;
3-hydroxyropyl(methyl)silandiyl(cyclopentadienyl)(1-(2-methyl-indenyl)) zirconium dichloride;
3-hydroxyropyl(methyl)silandiyl(cyclopentadienyl)(9-fluorenyl) zirconium dichloride;
3-hydroxyropyl(methyl)silandiyl(cyclopentadienyl)(9-(2-methyl-fluorenyl)) zirconium dichloride;
3-hydroxyropyl(methyl)silandiylbis(1-indenyl) zirconium dichloride;
3-hydroxyropyl(methyl)silandiyl(cyclopentadienyl)(1-(2-methylbenzoindenyl)) zirconium dichloride;
2-hydroxy-ethoxy(methyl)silandiylbis(cyclopentadienyl) zirconium dichloride;
2-hydroxy-ethoxy(methyl)silandiyl(cyclopentadienyl)(1-indenyl) zirconium dichloride;
2-hydroxy-ethoxy(methyl)silandiyl(cyclopentadienyl)(1-(2-methyl-indenyl)) zirconium dichloride;
2-hydroxy-ethoxy(methyl)silandiyl(cyclopentadienyl)(9-fluorenyl) zirconium dichloride;
2-hydroxy-ethoxy(methyl)silandiyl(cyclopentadienyl)(9-(2-methyl-fluorenyl)) zirconium dichloride;
2-hydroxy-ethyl-(dimethyl)silyl-(methyl)silandiylbis(cyclopentadienyl) zirconium dichloride;
2-hydroxy-ethyl-(dimethyl)silyl-(methyl)silandiyl(cyclopentadienyl)(1-indenyl) zirconium dichloride;
2-hydroxy-ethyl-(dimethyl)silyl-(methyl)silandiyl(cyclopentadienyl)(1-(2-methyl-indenyl)) zirconium dichloride;
2-hydroxy-ethyl-(dimethyl)silyl-(methyl)silandiyl(cyclopentadienyl)(9-fluorenyl) zirconium dichloride;
2-hydroxy-ethyl-(dimethyl)silyl-(methyl)silandiyl(cyclopentadienyl)(9-(2-methyl-fluorenyl)) zirconium dichloride;
2-hydroxy-ethoxy-(methyl)methylidenebis(cydopentadienyl) zirconium dichloride;
2-hydroxy-ethoxy-(methyl)methylidene(cyclopentadienyl)(1-indenyl) zirconium dichloride;
2-hydroxy-ethoxy-(methyl)methylidene(cyclopentadienyl)(1-(2-methyl-indenyl)) zirconium dichloride;
2-hydroxy-ethoxy-(methyl)methylidene(cyclopentadienyl)(9-fluorenyl) zirconium dichloride;
2-hydroxy-ethoxy-(methyl)methylidene(cyclopentadienyl)(9-(2-methyl-fluorenyl)) zirconium dichloride;
2-hydroxy-ethyl-(dimethyl)silyl-(methyl)methylidenebis(cyclopentadienyl) zirconium dichloride;
2-hydroxy-ethyl-(dimethyl)silyl-(methyl)methylidene(cyclopentadienyl)(1-indenyl) zirconium dichloride;
2-hydroxy-ethyl-(dimethyl)silyl-(methyl)methylidene(cyclopentadienyl)(1-(2-methyl-indenyl)) zirconium dichloride;
2-hydroxy-ethyl-(dimethyl)silyl-(methyl)methylidene(cyclopentadienyl)(9-fluorenyl) zirconium dichloride;
2-hydroxy-ethyl-(dimethyl)silyl-(methyl)methylidene(cyclopentadienyl)(9-(2-methyl-fluorenyl)) zirconium dichloride;
2-hydroxy-ethyl-(dimethyl)silyl-(methyl)methylidenebis(1-indenyl) zirconium dichloride;
1-(2-hydroxyethyl)-ethylidenebis(cyclopentadienyl) zirconium dichloride;
1-(2-hydroxyethyl)-ethylidene-1-(cyclopentadienyl)-2-(1-indenyl) zirconium dichloride;
1-(2-hydroxyethyl)-ethylidene-1-(cyclopentadienyl)-2-(1-(2-methyl-indenyl)) zirconium dichloride;
1-(2-hydroxyethyl)-ethylidene-1-(cyclopentadienyl)-2-(9-fluorenyl) zirconium dichloride;
1-(2-hydroxyethyl)-ethylidene-1-(cyclopentadienyl)-2-(9-(2-methyl-fluorenyl)) zirconium dichloride;
1-(2-hydroxyethyl)-ethylidenebis(1-indenyl) zirconium dichloride;
1-(3-hydroxypropyl)-ethylidenebis(cyclopentadienyl) zirconium dichloride;
1-(3-hydroxypropyl)-ethylidene-1-(cyclopentadienyl)-2-(1-indenyl) zirconium dichloride;
1-(3-hydroxypropyl)-ethylidene-1-(cyclopentadienyl)-2-(1-(2-methyl-indenyl)) zirconium dichloride;
1-(3-hydroxypropyl)-ethylidene-1-(cyclopentadienyl)-2-(9-fluorenyl) zirconium dichloride;
1-(3-hydroxypropyl)-ethylidene-1-(cyclopentadienyl)-2-(9-(2-methyl-fluorenyl)) zirconium dichloride;
1-(3-hydroxypropyl)-ethylidenebis(1-indenyl) zirconium dichloride;
1-(2-hydroxyethoxy)-ethylidenebis(cyclopentadienyl) zirconium dichloride;
1-(2-hydroxyethoxy)-ethylidene-1-(cyclopentadienyl)-2-(1-indenyl) zirconium dichloride;
1-(2-hydroxyethoxy)-ethylidene-1-(cyclopentadienyl)-2-(1-(2-methyl-indenyl)) zirconium dichloride;
1-(2-hydroxyethoxy)-ethylidene-1-(cyclopentadienyl)-2-(9-fluorenyl) zirconium dichloride;
1-(2-hydroxyethoxy)-ethylidene-1-(cyclopentadienyl)-2-(9-(2-methyl-fluorenyl)) zirconium dichloride;
1-(2-hydroxyethyl)-(dimethyl)silyl ethylidenebis(cyclopentadienyl) zirconium dichloride;
1-(2-hydroxyethyl)-(dimethyl)silyl ethylidene-1-(cyclopentadienyl)-2-(1-indenyl) zirconium dichloride;
1-(2-hydroxyethyl)-(dimethyl)silyl ethylidene-1-(cyclopentadienyl)-2-(1-(2-methyl-indenyl)) zirconium dichloride
1-(2-hydroxyethyl)-(dimethyl)silyl ethylidene-1-(cyclopentadienyl)-2-(9-fluorenyl) zirconium dichloride;
1-(2-hydroxyethyl)-(dimethyl)silyl ethylidene-1-(cyclopentadienyl)-2-(9-(2-methyl-fluorenyl)) zirconium dichloride;
(2-hydroxyethyl)(methyl)silandiyl-(tertbutylamido)(cylopentadienyl) titanium dichloride;
(2-hydroxyethyl)(methyl)silandiyl-(tertbutylamido)(tetramethylcylopentadienyl) titanium dichloride;
(2-hydroxyethyl)(methyl)silandiyl-(tertbutylamido)(1-indenyl) titanium dichloride;
(2-hydroxyethyl)(methyl)silandiyl-(tertbutylamido)(1-(2-methyl-indenyl)) titanium dichloride;
(2-hydroxyethyl)(methyl)silandiyl-(tertbutylamido)(9-fluorenyl) titanium dichloride;
(2-hydroxyethyl)(methyl)silandiyl-(tertbutylamido)(9-(2-methyl-fluorenyl)) titanium dichloride;
(2-hydroxyethyl)(methyl)silandiyl-(tertbutylamido)(1-(2-metthylbenzoindenyl) titanium dichloride;
(dimethyl)silandiyl-(tertbutylamido)(3-((2-hydroxyethyl)cylopentadienyl) titanium dichloride;
(dimethyl)silandiyl-(tertbutylamido)(1-(3-(2-hydroxyethyl)indenyl) titanium dichloride;
(dimethyl)silandiyl-(2-(2-hydroxyethyl)amido)(cylopentadienyl) titanium dichloride;
(dimethyl)silandiyl-(2-(2-hydroxyethyl)amido)(tetramethylcylopentadienyl) titanium dichloride;
(dimethyl)silandiyl-(2-(2-hydroxyethyl)amido)(1-indenyl) titanium dichloride;
(dimethyl)silandiyl-(2-(2-hydroxyethyl)amido)(9-fluorenyl) titanium dichloride;
(dimethyl)silandiyl-(2-(2-hydroxyethyl)amido)(1-(2-methylbenzoindenyl) titanium dichloride;
(3-hydroxypropyl)(methyl)silandiyl(tertbutylamido)-(cylopentadienyl) titanium dichloride;
(3-hydroxypropyl)(methyl)silandiyl-(tertbutylamido)(tetramethylcyclopentadienyl) titanium dichloride;
(3-hydroxypropyl)(methyl)silandiyl-(tertbutylamido)(1-indenyl) titanium dichloride;
(3-hydroxypropyl)(methyl)silandiyl-(tertbutylamido)(1-(2-methyl-indenyl)) titanium dichloride;
(3-hydroxypropyl)(methyl)silandiyl-(tertbutylamido)(9-fluorenyl) titanium dichloride;
(3-hydroxypropyl)(methyl)silandiyl-(tertbutylamido)(9-(2-methyl-fluorenyl)) titanium dichloride;
(3-hydroxypropyl)(methyl)silandiyl(tertbutylamido)-(1-(2-methylbenzoindenyl) titanium dichloride;
(dimethyl)silandiyl-(tertbutylamido)(3-((3-hydroxypropyl)cylopentadienyl) titanium dichloride;
(dimethyl)silandiyl-(tertbutylamido)(1-(3-(3-hydroxypropyl)indenyl) titanium dichloride;
(dimethyl)silandiyl-(3-(3-hydroxypropyl)amido)(cylopentadienyl) titanium dichloride;
(dimethyl)silandiyl-(3-(3-hydroxypropyl)amido)(tetramethylcylopentadienyl) titanium dichloride;
(dimethyl)silandiyl-(3-(3-hydroxypropyl)amido)(1-indenyl) titanium dichloride;
(dimethyl)silandiyl-(3-(3-hydroxypropyl)amido)(9-fluorenyl) titanium dichloride;
(dimethyl)silandiyl-(3-(3-hydroxypropyl)amido)(1-(2-methylbenzoindenyl) titanium dichloride;
2-hydroxyethyl-methoxy (methyl)silandiyl-(tertbutylamido)(cylopentadienyl) titanium dichloride;
2-hydroxyethyl-methoxy(methyl)silandiyl-(tertbutylamido)(tetramethylcyclopentadienyl) titanium dichloride;
2-hydroxyethyl-methoxy(methyl)silandiyl-(tertbutylamido)(1-indenyl) titanium dichloride;
2-hydroxyethyl-methoxy(methyl)silandiyl-(tertbutylamido)(1-(2-methyl-indenyl)) titanium dichloride;
2-hydroxyethyl-methoxy(methyl)silandiyl-(tertbutylamido)(9-fluorenyl) titanium dichloride;
2-hydroxyethyl-methoxy(methyl)silandiyl-(tertbutylamido)(9-(2-methyl-fluorenyl)) titanium dichloride;
(2-hydroxyethoxy)(methyl)silandiyl-(tertbutylamido)(cylopentadienyl) titanium dichloride;
(2-hydroxyethoxy)(methyl)silandiyl-(tertbutylamido)(tetramethylcyclopentadienyl) titanium dichloride;
(2-hydroxyethoxy)(methyl)silandiyl-(tertbutylamido)(1-indenyl) titanium dichloride;
(2-hydroxyethoxy)(methyl)silandiyl-(tertbutylamido)(1-(2-methyl-indenyl)) titanium dichloride;
(2-hydroxyethoxy)(methyl)silandiyl-(tertbutylamido)(9-fluorenyl) titanium dichloride;
(2-hydroxyethoxy)(methyl)silandiyl-(tertbutylamido)(9-(2-methyl-fluorenyl)) titanium dichloride;
(2-hydroxyethyl)-(dimethyl)silyl-(methyl)silandiyl(tertbutylamido)-(cylopentadienyl) titanium dichloride;
(2-hydroxyethyl)-(dimethyl)silyl-(methyl) silandiyl-(tertbutylamido)(tetramethylcyclopentadienyl) titanium dichloride;
(2-hydroxyethyl)-(dimethyl)silyl-(methyl)silandiyl-(tertbutylamido)(1-indenyl) titanium dichloride;
(2-hydroxyethyl)-(dimethyl)silyl-(methyl)silandiyl-(tertbutylamido)(1-(2-methyl-indenyl)) titanium dichloride;
(2-hydroxyethyl)-(dimethyl)silyl-(methyl)silandiyl-(tertbutylamido)(1-indenyl) titanium dichloride;
(2-hydroxyethyl)-(dimethyl)silyl-(methyl)silandiyl-(tertbutylamido)(9-(2-methyl-fluorenyl)) titanium dichloride;
(2-hydroxyethyl)-(methyl)methylene(tertbutylamido)(cylopentadienyl) titanium dichloride;
(2-hydroxyethyl)-(methyl)methylene(tertbutylamido)(tetramethylcyclopentadienyl) titanium dichloride;
(2-hydroxyethyl)-(methyl)methylene(tertbutylamido)(1-indenyl) titanium dichloride;
(2-hydroxyethyl)-(methyl)methylene(tertbutylamido)(1-(2-methyl-indenyl)) titanium dichloride;
(2-hydroxyethyl)-(methyl)methylene(tertbutylamido)(9-fluorenyl) titanium dichloride;
(2-hydroxyethyl)-(methyl)methylene(tertbutylamido)(9-(2-methyl-fluorenyl)) titanium dichloride;
(3-hydroxypropyl)-(methyl)methylene(tertbutylamido)(cylopentadienyl) titanium dichloride;
(3-hydroxypropyl)-(methyl)methylene(tertbutylamido)(tetramethylcyclopentadienyl) titanium dichloride;
(3-hydroxypropyl)-(methyl)methylene(tertbutylamido)(indenyl) titanium dichloride;
(3-hydroxypropyl)-(methyl)methylene(tertbutylamido)(2-methyl-indenyl) titanium dichloride;
(3-hydroxypropyl)-(methyl)methylene(tertbutylamido)(9-fluorenyl) titanium dichloride;
(3-hydroxypropyl)-(methyl)methylene(tertbutylamido)(2-methyl-fluorenyl) titanium dichloride;
2-hydroxyethyl-methoxy(methyl)methylene(tertbutylamido)(cylopentadienyl) titanium dichloride;
2-hydroxyethyl-methoxy(methyl)methylene(tertbutylamido)(cylopentadienyl) titanium dichloride;
2-hydroxyethyl-methoxy(methyl)methylen(tertbutylamido)(1-indenyl) titanium dichloride;
2-hydroxyethyl-methoxy(methyl)methylen(-tertbutylamido)(1-(2-methyl-indenyl)) titanium dichloride;
2-hydroxyethyl-methoxy(methyl)methylen(-tertbutylamido)(9-fluorenyl) titanium dichloride;
2-hydroxyethyl-methoxy(methyl)methylen(-tertbutylamido)(9-(2-methyl-fluorenyl)) titanium dichloride;
(2-hydroxyethoxy)-(methyl)methylene(tertbutylamido)(cylopentadienyl) titanium dichloride;
(2-hydroxyethoxy)-(methyl)methylene(tertbutylamido)(tetramethylcyclopentadienyl) titanium dichloride;
(2-hydroxyethoxy)-(methyl)methylen(tertbutylamido)(1-indenyl) titanium dichloride;
(2-hydroxyethoxy)-(methyl)methylen(tertbutylamido)(1-(2-methyl-indenyl)) titanium dichloride;
(2-hydroxyethoxy)-(methyl)methylen(tertbutylamido)(9-fluorenyl) titanium dichloride;
(2-hydroxyethoxy)-(methyl)methylen(tertbutylamido)(9-(2-methyl-fluorenyl)) titanium dichloride;
(2-hydroxyethyl)-(dimethyl)silyl-(methyl)methylene(tertbutylamido)(cylopentadienyl) titanium dichloride;
(2-hydroxyethyl)-(dimethyl)silyl (methyl) methylene (tertbutylamido) (tetramethylcyclopentadienyl) titanium dichloride;
(2-hydroxyethyl)-(dimethyl)silyl-(methyl)methylene(tertbutylamido)(1-indenyl) titanium dichloride;
(2-hydroxyethyl)-(dimethyl)silyl-(methyl)methylene(tertbutylamido)(1-(2-methyl-indenyl)) titanium dichloride;
(2-hydroxyethyl)-(dimethyl)silyl-(methyl)methylene(tertbutylamido)(9-fluorenyl) titanium dichloride;
(2-hydroxyethyl)-(dimethyl)silyl-(methyl)methylene(tertbutylamido)(9-(2-methyl-fluorenyl)) titanium dichloride;
(2-hydroxyethyl)(methyl) silandiyl-oxo(cylopentadienyl) titanium dichloride;
(2-hydroxyethyl)(methyl) silandiyl-oxo-(tetramethylcyclopentadienyl) titanium dichloride;
(2-hydroxyethyl)(methyl) silandiyl-oxo(1-indenyl) titanium dichloride;
(2-hydroxyethyl)(methyl) silandiyl-oxo(1-(2-methyl-indenyl)) titanium dichloride;
(2-hydroxyethyl)(methyl) silandiyl-oxo(9-fluorenyl) titanium dichloride;
(2-hydroxyethyl)(methyl) silandiyl-oxo(9-(2-methyl-fluorenyl)) titanium dichloride;
(3-hydroxypropyl)(methyl) silandiyl-oxo(cylopentadienyl) titanium dichloride;
(3-hydroxypropyl)(methyl) silandiyl-oxo(tetramethylcydopentadienyl) titanium dichloride;
(3-hydroxypropyl)(methyl) silandiyl-oxo(1-indenyl) titanium dichloride;
(3-hydroxypropyl)(methyl) silandiyl-oxo(1-(2-methyl-indenyl)) titanium dichloride;
(3-hydroxypropyl)(methyl) silandiyl-oxo(9-fluorenyl) titanium dichloride;
(3-hydroxypropyl)(methyl) silandiyl-oxo(9-(2-methyl-fluorenyl)) titanium dichloride;
2-hydroxyethyl-methoxy(methyl) silandiyl- oxo(cylopentadienyl) titanium dichloride;
2-hydroxyethyl-methoxy(methyl) silandiyl-oxo(tetramethylcyclopentadienyl) titanium dichloride;
2-hydroxyethyl-methoxy(methyl) silandiyl-oxo(1-indenyl) titanium dichloride;
2-hydroxyethyl-methoxy(methyl) silandiyl-oxo(1-(2-methyl-indenyl)) titanium dichloride;
2-hydroxyethyl-methoxy(methyl) silandiyl-oxo(9-fluorenyl) titanium dichloride;
2-hydroxyethyl-methoxy(methyl) silandiyl-oxo(9-(2-methyl-fluorenyl)) titanium dichloride;
(2-hydroxyethoxy)(methyl) silandiyl-oxo(cylopentadienyl) titanium dichloride;
(2-hydroxyethoxy)(methyl) silandiyl-oxo(tetramethylcyclopentadienyl) titanium dichloride;
(2-hydroxyethoxy)(methyl) silandiyl-oxo(1-indenyl) titanium dichloride;
(2-hydroxyethoxy)(methyl) silandiyl-oxo(1-(2-methyl-indenyl)) titanium dichloride;
(2-hydroxyethoxy)(methyl) silandiyl-oxo(9-fluorenyl) titanium dichloride;
(2-hydroxyethoxy)(methyl) silandiyl-oxo(9-(2-methyl-fluorenyl)) titanium dichloride;
(2-hydroxyethyl)-(dimethyl)silyl-(methyl) silandiyl-oxo(cylopentadienyl) titanium dichloride;
(2-hydroxyethyl)-(dimethyl)silyl-(methyl) silandiyl-oxo(tetramethylcyclopentadienyl) titanium dichloride;
(2-hydroxyethyl)-(dimethyl)silyl-(methyl) silandiyl-oxo(1-indenyl) titanium dichloride;
(2-hydroxyethyl)-(dimethyl)silyl-(methyl) silandiyl-oxo(1-(2-methyl-indenyl)) titanium dichloride;
(2-hydroxyethyl)-(dimethyl)silyl-(methyl) silandiyl-oxo(fluorenyl) titanium dichloride;
(2-hydroxyethyl)-(dimethyl)silyl-(methyl) silandiyl-oxo(9-methylfluorenyl) titanium dichloride
(2-hydroxyethyl)(methyl)silandiyl-(tertbutylamido)(cylopentadienyl) zirconium dichloride;
(2-hydroxyethyl)(methyl)silandiyl-(tertbutylamido)(tetramethylcylopentadienyl) zirconium dichloride;
(2-hydroxyethyl)(methyl)silandiyl-(tertbutylamido)(1-indenyl) zirconium dichloride;
(2-hydroxyethyl)(methyl)silandiyl-(tertbutylamido)(1-(2-methyl-indenyl)) zirconium dichloride;
(2-hydroxyethyl)(methyl)silandiyl-(tertbutylamido)(9-fluorenyl) zirconium dichloride;
(2-hydroxyethyl)(methyl)silandiyl-(tertbutylamido)(9-(2-methyl-fluorenyl)) zirconium dichloride;
(2-hydroxyethyl)(methyl)silandiyl-(tertbutylamido)(1-(2-metthylbenzoindenyl) zirconium dichloride;
(dimethyl)silandiyl-(tertbutylamido)(3-((2-hydroxyethyl)cylopentadienyl) zirconium dichloride;
(dimethyl)silandiyl-(tertbutylamido)(1-(3-(2-hydroxyethyl)indenyl) zirconium dichloride;
(dimethyl)silandiyl-(2-(2-hydroxyethyl)amido)(cylopentadienyl) zirconium dichloride;
(dimethyl)silandiyl-(2-(2-hydroxyethyl)amido)(tetramethylcylopentadienyl) zirconium dichloride;
(dimethyl)silandiyl-(2-(2-hydroxyethyl)amido)(1-indenyl) zirconium dichloride;
(dimethyl)silandiyl-(2-(2-hydroxyethyl)amido)(9-fluorenyl) zirconium dichloride;
(dimethyl)silandiyl-(2-(2-hydroxyethyl)amido)(1-(2-methylbenzoindenyl) zirconium dichloride;
(3-hydroxypropyl)(methyl)silandiyl(tertbutylamido)-(cylopentadienyl) zirconium dichloride;
(3-hydroxypropyl)(methyl)silandiyl-(tertbutylamido)(tetramethylcyclopentadienyl) zirconium dichloride;
(3-hydroxypropyl)(methyl)silandiyl-(tertbutylamido)(1-indenyl) zirconium dichloride;
(3-hydroxypropyl)(methyl)silandiyl-(tertbutylamido)(1-(2-methyl-indenyl)) zirconium dichloride;
(3-hydroxypropyl)(methyl)silandiyl-(tertbutylamido)(9-fluorenyl) zirconium dichloride;
(3-hydroxypropyl)(methyl)silandiyl-(tertbutylamido)(9-(2-methyl-fluorenyl)) zirconium dichloride;
(3-hydroxypropyl)(methyl)silandiyl(tertbutylamido)-(1-(2-methylbenzoindenyl) zirconium dichloride;
(dimethyl)silandiyl-(tertbutylamido)(3-((3-hydroxypropyl)cylopentadienyl) zirconium dichloride;
(dimethyl)silandiyl-(tertbutylamido)(1-(3-(3-hydroxypropyl)indenyl) zirconium dichloride;
(dimethyl)silandiyl-(3-(3-hydroxypropyl)amido)(cylopentadienyl) zirconium dichloride;
(dimethyl)silandiyl-(3-(3-hydroxypropyl)amido)(tetramethylcylopentadienyl) zirconium dichloride;
(dimethyl)silandiyl-(3-(3-hydroxypropyl)amido)(1-indenyl) zirconium dichloride;
(dimethyl)silandiyl-(3-(3-hydroxypropyl)amido)(9-fluorenyl) zirconium dichloride;
(dimethyl)silandiyl-(3-(3-hydroxypropyl)amido)(1-(2-methylbenzoindenyl) zirconium dichloride;
2-hydroxyethyl-methoxy (methyl)silandiyl-(tertbutylamido)(cylopentadienyl) zirconium dichloride;
2-hydroxyethyl-methoxy(methyl)silandiyl-(tertbutylamido)(tetramethylcydopentadienyl) zirconium dichloride;
2-hydroxyethyl-methoxy(methyl)silandiyl-(tertbutylamido)(1-indenyl) zirconium dichloride;
2-hydroxyethyl-methoxy(methyl)silandiyl-(tertbutylamido)(1-(2-methyl-indenyl)) zirconium dichloride;
2-hydroxyethyl-methoxy(methyl)silandiyl-(tertbutylamido)(9-fluorenyl) zirconium dichloride;
2-hydroxyethyl-methoxy(methyl)silandiyl-(tertbutylamido)(9-(2-methyl-fluorenyl)) zirconium dichloride;
(2-hydroxyethoxy)(methyl)silandiyl-(tertbutylamido)(cylopentadienyl) zirconium dichloride;
(2-hydroxyethoxy)(methyl)silandiyl-(tertbutylamido)(tetramethylcyclopentadienyl) zirconium dichloride;
(2-hydroxyethoxy)(methyl)silandiyl-(tertbutylamido)(1-indenyl) zirconium dichloride;
(2-hydroxyethoxy)(methyl)silandiyl-(tertbutylamido)(1-(2-methyl-indenyl)) zirconium dichloride;
(2-hydroxyethoxy)(methyl)silandiyl-(tertbutylamido)(9-fluorenyl) zirconium dichloride;
(2-hydroxyethoxy)(methyl)silandiyl-(tertbutylamido)(9-(2-methyl-fluorenyl)) zirconium dichloride;
(2-hydroxyethyl)-(dimethyl)silyl-(methyl)silandiyl(tertbutylamido)-(cylopentadienyl) zirconium dichloride;
(2-hydroxyethyl)-(dimethyl)silyl-(methyl) silandiyl-(tertbutylamido)(tetramethylcyclopentadienyl) zirconium dichloride;
(2-hydroxyethyl)-(dimethyl)silyl-(methyl)silandiyl-(tertbutylamido)(1-indenyl) zirconium dichloride;
(2-hydroxyethyl)-(dimethyl)silyl-(methyl)silandiyl-(tertbutylamido)(1-(2-methyl-indenyl)) zirconium dichloride;
(2-hydroxyethyl)-(dimethyl)silyl-(methyl)silandiyl-(tertbutylamido)(1-indenyl) zirconium dichloride;
(2-hydroxyethyl)-(dimethyl)silyl-(methyl)silandiyl-(tertbutylamido)(9-(2-methyl-fluorenyl)) zirconium dichloride;
(2-hydroxyethyl)-(methyl)methylene(tertbutylamido)(cylopentadienyl) zirconium dichloride;
(2-hydroxyethyl)-(methyl)methylene(tertbutylamido)(tetramethylcydopentadienyl) zirconium dichloride;
(2-hydroxyethyl)-(methyl)methylene(tertbutylamido)(1-indenyl) zirconium dichloride;
(2-hydroxyethyl)-(methyl)methylene(tertbutylamido)(1-(2-methyl-indenyl)) zirconium dichloride;
(2-hydroxyethyl)-(methyl)methylene(tertbutylamido)(9-fluorenyl) zirconium dichloride;
(2-hydroxyethyl)-(methyl)methylene(tertbutylamido)(9-(2-methyl-fluorenyl)) zirconium dichloride;
(3-hydroxypropyl)-(methyl)methylene(tertbutylamido)(cylopentadienyl) zirconium dichloride;
(3-hydroxypropyl)-(methyl)methylene(tertbutylamido)(tetramethylcyclopentadienyl) zirconium dichloride;
(3-hydroxypropyl)-(methyl)methylene(tertbutylamido)(indenyl) zirconium dichloride;
(3-hydroxypropyl)-(methyl)methylene(tertbutylamido)(2-methyl-indenyl) zirconium dichloride;
(3-hydroxypropyl)-(methyl)methylene(tertbutylamido)(9-fluorenyl) zirconium dichloride;
(3-hydroxypropyl)-(methyl)methylene(tertbutylamido)(2-methyl-fluorenyl) zirconium dichloride;
2-hydroxyethyl-methoxy(methyl)methylene(tertbutylamido)(cylopentadienyl) zirconium dichloride;
2-hydroxyethyl-methoxy(methyl)methylene(tertbutylamido)(tetramethylcyclopentadienyl) zirconium dichloride;
2-hydroxyethyl-methoxy(methyl)methylen(tertbutylamido)(1-indenyl) zirconium dichloride;
2-hydroxyethyl-methoxy(methyl)methylen(-tertbutylamido)(1-(2-methyl-indenyl)) zirconium dichloride;
2-hydroxyethyl-methoxy(methyl)methylen(-tertbutylamido)(9-fluorenyl) zirconium dichloride;
2-hydroxyethyl-methoxy(methyl)methylen(-tertbutylamido)(9-(2-methyl-fluorenyl)) zirconium dichloride;
(2-hydroxyethoxy)-(methyl)methylene(tertbutylamido)(cylopentadienyl) zirconium dichloride;
(2-hydroxyethoxy)-(methyl)methylene(tertbutylamido)(tetramethylcyclopentadienyl) zirconium dichloride;
(2-hydroxyethoxy)-(methyl)methylen(tertbutylamido)(1-indenyl) zirconium dichloride;
(2-hydroxyethoxy)-(methyl)methylen(tertbutylamido)(1-(2-methyl-indenyl)) zirconium dichloride;
(2-hydroxyethoxy)-(methyl)methylen(tertbutylamido)(9-fluorenyl) zirconium dichloride;
(2-hydroxyethoxy)-(methyl)methylen(tertbutylamido)(9-(2-methyl-fluorenyl)) zirconium dichloride;
(2-hydroxyethyl)-(dimethyl)silyl-(methyl)methylene(tertbutylamido)(cylopentadienyl) zirconium dichloride;
(2-hydroxyethyl)-(dimethyl)silyl (methyl) methylene (tertbutylamido) (tetramethylcyclopentadienyl) zirconium dichloride;
(2-hydroxyethyl)-(dimethyl)silyl-(methyl)methylene(tertbutylamido)(1-indenyl) zirconium dichloride;
(2-hydroxyethyl)-(dimethyl)silyl-(methyl)methylene(tertbutylamido)(1-(2-methyl-indenyl)) zirconium dichloride;
(2-hydroxyethyl)-(dimethyl)silyl-(methyl)methylene(tertbutylamido)(9-fluorenyl) zirconium dichloride;
(2-hydroxyethyl)-(dimethyl)silyl-(methyl)methylene(tertbutylamido)(9-(2-methyl-fluorenyl)) zirconium dichloride;
(2-hydroxyethyl)(methyl) silandiyl-oxo(cylopentadienyl) zirconium dichloride;
(2-hydroxyethyl)(methyl) silandiyl-oxo-(tetramethylcyclopentadienyl) zirconium dichloride;
(2-hydroxyethyl)(methyl) silandiyl-oxo(1-indenyl) zirconium dichloride;
(2-hydroxyethyl)(methyl) silandiyl-oxo(1-(2-methyl-indenyl)) zirconium dichloride;
(2-hydroxyethyl)(methyl) silandiyl-oxo(9-fluorenyl) zirconium dichloride;
(2-hydroxyethyl)(methyl) silandiyl-oxo(9-(2-methyl-fluorenyl)) zirconium dichloride;
(3-hydroxypropyl)(methyl) silandiyl-oxo(cylopentadienyl) zirconium dichloride;
(3-hydroxypropyl)(methyl) silandiyl-oxo(tetramethylcyclopentadienyl) zirconium dichloride;
(3-hydroxypropyl)(methyl) silandiyl-oxo(1-indenyl) zirconium dichloride;
(3-hydroxypropyl)(methyl) silandiyl-oxo(1-(2-methyl-indenyl)) zirconium dichloride;
(3-hydroxypropyl)(methyl) silandiyl-oxo(9-fluorenyl) zirconium dichloride;
(3-hydroxypropyl)(methyl) silandiyl-oxo(9-(2-methyl-fluorenyl)) zirconium dichloride;
2-hydroxyethyl-methoxy(methyl) silandiyl- oxo(cylopentadienyl) zirconium dichloride;
2-hydroxyethyl-methoxy(methyl) silandiyl-oxo(tetramethylcyclopentadienyl) zirconium dichloride;
2-hydroxyethyl-methoxy(methyl) silandiyl-oxo(1-indenyl) zirconium dichloride;
2-hydroxyethyl-methoxy(methyl) silandiyl-oxo(1-(2-methyl-indenyl)) zirconium dichloride;
2-hydroxyethyl-methoxy(methyl) silandiyl-oxo(9-fluorenyl) zirconium dichloride;
2-hydroxyethyl-methoxy(methyl) silandiyl-oxo(9-(2-methyl-fluorenyl)) zirconium dichloride;
(2-hydroxyethoxy)(methyl) silandiyl-oxo(cylopentadienyl) zirconium dichloride;
(2-hydroxyethoxy)(methyl) silandiyl-oxo(tetramethylcyclopentadienyl) zirconium dichloride;
(2-hydroxyethoxy)(methyl) silandiyl-oxo(1-indenyl) zirconium dichloride;
(2-hydroxyethoxy)(methyl) silandiyl-oxo(1-(2-methyl-indenyl)) zirconium dichloride;
(2-hydroxyethoxy)(methyl) silandiyl-oxo(9-fluorenyl) zirconium dichloride;
(2-hydroxyethoxy)(methyl) silandiyl-oxo(9-(2-methyl-fluorenyl)) zirconium dichloride;
(2-hydroxyethyl)-(dimethyl)silyl-(methyl) silandiyl-oxo(cylopentadienyl) zirconium dichloride;
(2-hydroxyethyl)-(dimethyl)silyl-(methyl) silandiyl-oxo(tetramethylcyclopentadienyl) zirconium dichloride;
(2-hydroxyethyl)-(dimethyl)silyl-(methyl) silandiyl-oxo(1-indenyl) zirconium dichloride;
(2-hydroxyethyl)-(dimethyl)silyl-(methyl) silandiyl-oxo(1-(2-methyl-indenyl)) zirconium dichloride;
(2-hydroxyethyl)-(dimethyl)silyl-(methyl) silandiyl-oxo(fluorenyl) zirconium dichloride;
(2-hydroxyethyl)-(dimethyl)silyl-(methyl) silandiyl-oxo(9-methylfluorenyl) zirconium dichloride
ethylidene(1-(3-(3-hydroxypropyl)-indenyl))(cyclopentadienyl) zirconium dichloride;
ethylidene(1-(3-(2-hydroxyethyl)-indenyl))(cyclopentadienyl) zirconium dichloride;
dimethylsilandiyl(1-(3-(2-hydroxyethyl)-indenyl))(cyclopentadienyl) zirconium dichloride;
dimethylsilandiyl(1-(3-(3-hydroxypropyl)-indenyl)) (cyclopentadienil) zirconium dichloride;
isopropylidene(1-(3-(2-hydroxyethyl)-indenyl))(cyclopentadienyl) zirconium dichloride;
isopropylidene(1-(3-(3-hydroxypropyl)-indenyl(cyclopentadienyl) zirconium dichloride;

The metallocene complexes belonging to the general formula I can be prepared through reaction of a compound of general formula [(LR_{k-f}(R^{I}OJ)_{f})]M', wherein M' is an alkali metal, preferably Li, Na or K and J is a protective group that masks the OH group, with a transition metal compound of general formula (LRₖ)_{z}MXₙ(E)_{q}, wherein E is a linear or cyclic ether, q is a number ranging from 0 to 4 and n is an integer number ranging from 2 to 4 and L, R, k, z and X have been already defined.

The metallocene complexes belonging to the general formulas II and III can be prepared through reaction of a transition metal compound of general formula MXₙ(E)_{q}, wherein E is a linear or cyclic ether, q is a number between 0 and 4 and n is 3 or 4, with a compound of general formula 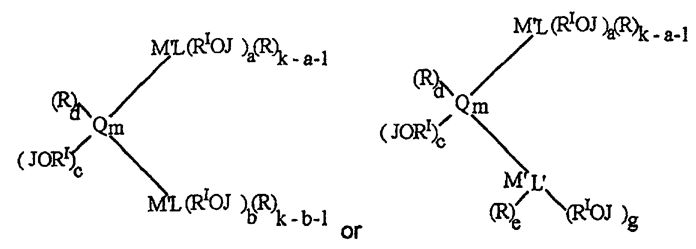 wherein M' is an alkali metal, preferably Li, Na or K and J is a protective group that masks the OH group, for example it is a SiR^{II}₃ or another protective group known in the art. Preferred transition metal compounds of formula MXₙ(E)_{q} are TiCl₄, ZrCl₄, HfCl₄, TiCl₃, TiCl₃• 2THF.

The reaction between the transition metal compound and the alkali metal derivative is preferably realized in a dry nitrogen atmosphere, by using anhydrous solvents such as linear or cyclic ethers (for example diethylether, tetrahydrofurane or dioxane), or aromatic hydrocarbons such as toluene.

The group O-J is then cleaved by a fit reaction. For example, when the protective group J is SiR^{II}₃, the de-protection reaction can be an hydrolysis reaction carried out in acidic medium; preferably the hydrolysis reaction is made with silica .

Metallocenes containing a O-SiR^{II}₃ group can be prepared according to the method disclosed in EP 97500068.6.

Metallocene compounds of the present invention can be used as catalysts of hydrogenation, epoxidation, double bond isomerization, ketons reduction, aldolic reaction, synthesis of different substituted olefins and as catalyst components for olefin polymerization.

The following examples are described in order to better understand the invention. The materials, the chemical compounds and the conditions used in these examples are illustrative and do not limit the scope of the invention.

### EXAMPLES

### Example 1. Synthesis of (cyclopentadienyl)((2-hydroxy-ethyl)-cyclopentadienyl) zirconium dichloride

### a) Preparation of 1-trimethylsiloxy 2-bromo-ethane

To 125 g (888 mmol) of 2-bromo-ethanol, 95 ml (1450 mmol) of hexamethyldisilazane are slowly added at 0° C. Ammonia evolution is immediately observed. The reaction is maintained under stirring for 12 hours and a colorless oil is obtained. (168.8 g 856 mmol. Yield:96%) ¹H-NMR (CDCI3): 3.66 (t,2H), 3.40 (t,2H), 0.14 (s,9H).

### b) Preparation of (2-trimethylsiloxy-ethyl)-cyclopentadiene

150 ml of a 2.3 M sodium cyclopentadienylide solution in tetrahydrofurane (346 mmol) is slowly added to a solution of 68.2 g (346 mmol) 2-trimethylsiloxy-1-bromo-ethane in tetrahydrofurane. The immediate formation of a pinkish solid is observed. The reaction is maintained under stirring for 12 hours. Then, an ammonium chloride aqueous solution is added. The organic phase is extracted, dried with magnesium sulphate and the volatile part is distilled under vacuum, obtaining an orange oil. This oil is distilled in order to obtain a colorless oil. (Tb.: 63-65° C, 0.02 bar (15 mmHg.)). (40.3 g, 221 mmol. Yield:64%). ¹H-NMR (CDCI3): 6.50-6.00 (m,3H), 3.75 (m,2H), 2.95 (m,2H), 2.65 (m,2H), 0.15 (s,9H).

### c) Preparation of potassium (2-trimethylsiloxy-ethyl)-cyclopentadienylide

To a suspension of 0.5 g (12.4 mmol) of potassium hydride in tetrahydrofurane, 2.25 g (12.4 mmol) of (2-trimethylsiloxy-ethyl)-cyclopentadiene in tetrahydrofurane is added. The reaction is maintained under stirring for 2 hours and then the volatile compounds are eliminated, leaving an oily solid which is washed with hexane in order to obtain a brown solid. (2.2 g Yield: 81%)

### d) Preparation of (cyclopentadienyl) ((2-trimethylsiloxy-ethyl)-cyclopentadienyl) zirconium dichloride

To a suspension of 3.52 g (10 mmol) of an adduct of cyclopentadienyl zirconium trichloride with dimethoxyethane in toluene, a suspension of 2.2 g (10 mmol) of potassium (2-trimethylsiloxy-ethyl)-cyclopentadienylide in toluene is added. The addition is realized at -78° C. An orange-brown suspension is immediately formed; it is maintained under stirring for 12 hours; then it is left settling and it is filtered. The obtained orange solution is concentrated up to 5 ml and hexane is added, so that a brown solid is obtained. (1.1 g, 2.7 mmol. Yield: 27%). ¹H-NMR: 6.00 (t,2H), 5.87 (s,5H), 5.67 (t,2H), 3.66 (t,2H), 2.92 (t,2H), 0.11 (s,9H). Mass spectrum. M⁺-65: (343): 33%.

### e) Preparation of (cyclopentadienyl)((2-hydroxy-ethyl)-cyclopentadienyl) zirconium dichloride

2.16 g (5.69 mmol) of the organocomplex (cyclopentadienyl)(trimethylsiloxyethylcyclopentadienyl) zirconium dichloride was added to a suspension of 2.9 g of Silica XPO 2407 in 75 ml of dry toluene at room temperature;
the suspension immediately acquired a greenish-yellow color. The sample was maintained under continuous stirring at room temperature for 48 hours.
The yellow solution was separated from the solid by filtration. The solution was brought to dryness and, after washing with three fractions of 15 ml of hexane, a dusty white solid was obtained. (0.57 g Yield: 30%) ¹H-NMR: (Cl₃CD): 1.65 (m,1H), 2.95 (t,2H), 4.05 (m,2H), 6.32 (m,2H), 6.35 (m,2H), 6.5 (s,5H).

### Example 2. Synthesis of (cyclopentadienyl) ((3-hydroxy-propyl)-cyclopentadienyl) zirconium dichloride

### a) Preparation of 1-trimethylsiloxy-3-bromo-propane

To 12.2 g (76 mmol) of hexamethyldisilazane, 21 g (151 mmol) of 3-bromo-1-propanol is added. Ammonia evolution is immediately observed. The reaction is maintained under stirring for 2 hours and 24.5 g (148 mmol) of the desired compound is finally obtained. Yield: 98%. ¹H-NMR (CDCI3): 3.74 (t,2H), 3.55 (t,2H), 2.09 (m,2H), 0.14 (s,9H).

### b) Preparation of (3-trimethylsiloxy-propyl)-cyclopentadiene

To 50 ml of a 2.3 M solution of sodium cyclopentadienylide (115 mmol), a solution of 24.3 g (115 mmol) of 3-trimethylsiloxy-1-bromo-propane in tetrahydrofurane is added. The quick formation of a pinkish solid is observed. The reaction is maintained under stirring for 12 hours and then it is neutralized with an ammonium chloride solution; the organic phase is extracted and concentrated to dryness in order to give an orange oil. (9.8 g, 50 mmol. Yield: 43%). ¹H-NMR (CDCI3): 6.47-6.00 (m,3H), 3.62 (m,2H), 2.95 (m,1H), 2.87 (m,1H), 2.43 (m,2H), 1.80 (m,2H), 0.17 (s,9H).

### c) Preparation of potassium (3-trimethylsiloxy-propyl)-cyclopentadienylide

To a suspension of 0.4 g (10 mmol) of potassium hydride in tetrahydrofurane, 1.96 g (10 mmol) of a (3-trimethylsiloxy-propyl)-cyclopentadiene in tetrahydrofurane is added. The reaction is maintained under stirring for 2 hours. Subsequently, the resulting suspension is concentrated to dryness, leaving an oily solid that, when it is washed with hexane, gives a cream-colored solid. (1.6 g, 7 mmol. Yield: 70%).

### d) Preparation of (cyclopentadienyl)((3-trimethylsiloxy)-propyl-cyclopentadienyl) zirconium dichloride

To a suspension of 2.46 g (7 mmol) of cyclopentadienyl zirconium trichloride in toluene, a suspension of 1.6 g (7 mmol) of potassium (3-trimethylsiloxy)-propyl-cyclopentadienylide in toluene is added. A yellow-brown-colored suspension immediately precipitates. The reaction is maintained for 12 hours. Subsequently, the solution is filtered and concentrated and a crystalline white solid is formed (0.8 g, 2 mmol, 28%). ¹H-NMR (C6D6): 5.87 (t,2H), 5.65 (t,2H), 3.46 (m,2H), 2.74 (m,2H), 1.73 (m,2H), 0.14 (s,9H). 13C-NMR (C6D6): 116.9, 115.0, 114.7, 112.2, 61.8, 33.6, 26.8, -0.393. Mass spectrum: M⁺-65(356): 30%.

### e) Preparation of (cyclopentadienyl)((3-hydroxy-propyl)-cyclopentadienyl) zirconium dichloride

0.5 g (1.18 mmol) of (cyclopentadienyl)(trimethylsiloxypropyl-cyclopentadienyl) zirconium dichloride was added to a suspension of 1.1 g of Silica XPO 2407 in 75 ml of dry toluene at room temperature;
the suspension immediately acquired a greenish-yellow color. The sample was maintained under continuous magnetic stirring at room temperature for two days. Then it was filtered, separating the solution from the insoluble product. The resulting colorless solution was brought to dryness. In this way it was possible to isolate a dusty white solid product. (0.16 g Yield: 39%) ¹H-NMR: (Cl₃CD): 1.45 (m,1H), 1.87 (t,2H), 2.72 (t,2H), 3.80 (t,2H), 6.10 (m,2H), 6.28 (m,2H), 6.28 (m,2H), 6.45 (s,5H). Mass spectrum: M⁺-36.45 (312):55%.

## Claims

1. Metallocene compound **characterized by** the following formulas:
(LRₖ)_{z}[LR_{k-f}(R^{I}OH)_{f}]ₓMX_{y} I 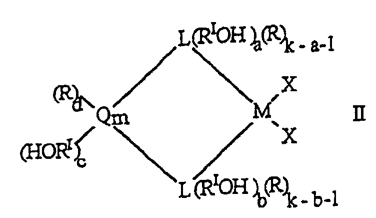 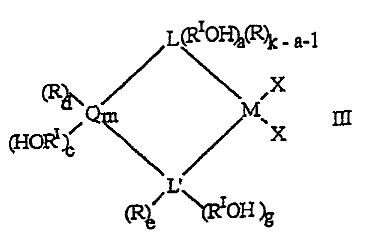
wherein:
**L**, equal to or different from each other, is selected from the group comprising: cyclopentadienyl, indenyl, tetrahydroindenyl, fluorenyl, octahydrofluorenyl or benzoindenyl;
each **R** is independently selected from hydrogen, C₁-C₂₀ alkyl, C₃-C₂₀ cycloalkyl, C₆-C₂₀ aryl, C₃-C₂₀ alkenyl, C₇-C₂₀ arylalkyl, C₇-C₂₀ alkylaryl, C₈-C₂₀ arylalkenyl, linear or branched, optionally substituted by 1 to 10 halogen atoms, or a group SiR^{II}₃;
each **R**^{**I**}, equal to or different from each other, is a group SiR^{II}₂ or a divalent aliphatic or aromatic hydrocarbon group containing from 1 to 20 carbon atoms, optionally containing from 1 to 5 heteroatoms of groups 14 to 16 of the periodic table of the elements and boron;
each **Q** is independently selected from B, C, Si, Ge or Sn;
**M** is a metal of group 3, 4 or 10 of the Periodic Table, Lanthanide or Actinide;
each **X** is independently selected from: hydrogen, chlorine, bromine, OR^{II}, NR^{II}₂, C₁-C₂₀ alkyl or C₆-C₂₀ aryl;
each **R**^{II} is independently selected from C₁-C₂₀ alkyl, C₃-C₂₀ cycloalkyl, C₆-C₂₀ aryl, C₃-C₂₀ alkenyl, C₇-C₂₀ arylalkyl, C₇-C₂₀ arylalkenyl or C₇-C₂₀ alkylaryl, linear or branched;
**L'** is N or O;
when L is cyclopentadienyl **k** is equal to 5, when L is indenyl k is equal to 7, when L is fluorenyl or benzoindenyl k is equal to 9, when L is tetrahydroindenyl k is equal to 11 and when L is octahydrofluorenyl k is equal to 17;
**z** is equal to 0, 1 or 2;
**x** is equal to 1, 2 or 3;
**y** is equal to 1, 2 or 3;
**x + y + z** is equal to the valence of **M**;
**m** is an integer which can assume the values 1, 2, 3 or 4;
**a** and **b** are integers whose value ranges from 0 to k-1;
**f** is an integer whose value ranges from 1 to **k**;
**g** is 0 or 1;
**c** and **e** are equal to 0 or 1;
**a + b + c** is at least 1;
**a + g + c** is at least 1;
**d** is equal to 0, 1 or 2;
when **Q** is B then **c** + **d** = 1;
when **Q** is C, Si, Ge or Sn, then **c** + **d** = 2;
when **L'** is N, then **g** + **e** = 1;
when **L'** is O, then **g** = 0 and **e** = 0.

2. Metallocene compound according to claim 1, wherein **R**^{I} is: C₁-C₂₀ alkylene, C₃-C₂₀ cycloalkylene, C₆-C₂₀ arylene, C₇-C₂₀ alkenyl, C₇-C₂₀ arylalkylene, or alkylarylene, linear or branched, or a group SiR^{II}₂.

3. Metallocene according to claim 1, wherein R^{I}OH is selected from: CH₂-CH₂-OH, CH₂-CH₂-CH₂-OH, CH₂-CH₂-CH₂-OH, SiMe₂-CH₂-CH₂-OH or SiMe₂-CH₂-CH₂-CH₂-OH.

4. Metallocene according to anyone of claims 1 to 3, wherein M is titanium, zirconium or hafnium.

5. Metallocene compound according to anyone of claims 1 to 4, wherein at least one L is a fluorenyl or octahydrofluorenyl ring.

6. Process for obtaining metallocene compounds of formula I according to anyone of claims 1 to 5 by reacting a compound of general formula [(LR_{k-f}(R^{I}OJ)_{f})]M', wherein M' is an alkali metal and J is a protective group that masks the OH group, with a transition metal compound of general formula (LRₖ)_{z}MXₙ(E)_{q}, wherein E is a linear or cyclic ether, q is a number ranging from 0 to 4 and n is an integer number ranging from 2 to 4 and L, R, k, z and X have been already defined, followed by a cleavage of the group O-J.

7. Process for obtaining metallocene compounds of formulas II and III according to anyone of claims 1 to 5 by reacting a transition metal compound of general formula MXₙ(E)_{q}, wherein E is a linear or cyclic ether, q is a number between 0 and 4 n is 3 or 4, with a compound of general formula 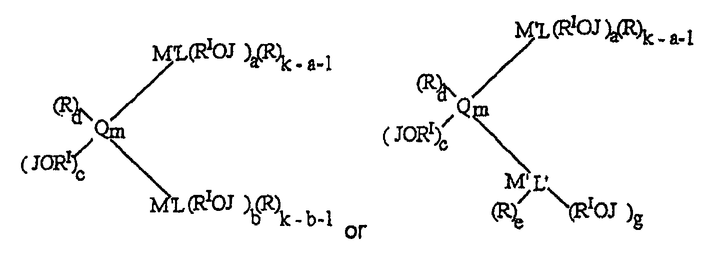 wherein M' is an alkali metal and J is a protective group that masks the OH group, followed by a cleavage of the group O-J.

8. Process according to claim 7, wherein the compound of formula MXₙ(E)_{q} is selected from the group consisting of TiCl₄, ZrCl₄, HfCl₄, TiCl₃, TiCl₃•2THF.

9. Process according to anyone of claims 6 to 8, wherein J is SiR^{II}₃ and the group O- SiR^{II}₃ is cleaved by controlled hydrolysis reactions.

10. Process according to anyone of claims 6 or 7, wherein M' is Li, Na or K.

## Patentansprüche

1. Eine Metallocenverbindung, **gekennzeichnet durch** folgende Formeln:
(LRₖ)_{z}[LR_{k-f}(R^{I}OH)_{f}]ₓMX_{y} I 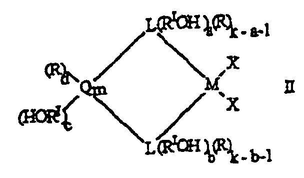 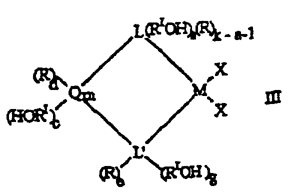
in welchen:
**L**, die gleich oder voneinander verschieden sind, aus der aus Cyclopentadienyl, Indenyl, Tetrahydroindenyl, Fluorenyl, Octahydrofluorenyl oder Benzoindenyl bestehenden Gruppe ausgewählt werden;
**R** jeweils unabhängig aus Wasserstoff, geradkettigem oder verzweigtem, wahlweise **durch** 1 bis 10 Halogenatome ersetztes C₁-C₂₀-Alkyl, C₃-C₂₀-Cycloalkyl, C₆-C₂₀-Aryl, C₃-C₂₀-Alkenyl, C₇-C₂₀-Arylalkyl, C₇-C₂₀-Alkylaryl, C₈-C₂₀-Arylalkenyl, oder einer SiR^{II}₃-Gruppe ausgewählt wird;
**R**^{**I**} jeweils gleich oder voneinander verschieden und eine SiR^{II}₂-Gruppe oder eine aliphatische zweiwertige Gruppe oder eine aromatische Kohlenwasserstoffgruppe ist, die 1 bis 20 Kohlenstoffatome enthält und wahlweise 1 bis 5 Heteroatome der Gruppen 14 bis 16 des Periodensystems der Elemente sowie Bor enthalten kann;
**Q** jeweils unabhängig aus B, C, Si, Ge oder Sn ausgewählt wird;
**M** ein Metall der Gruppe 3, 4 oder 10 des Periodensystems, Lanthanid oder Actinid ist;
**X** jeweils unabhängig aus Wasserstoff, Chlor, Brom, OR^{II}, NR^{II}₂, C₁-C₂₀-Alkyl oder C₆-C₂₀-Aryl ausgewählt wird;
**R**^{II} jeweils unabhängig aus geradkettigem oder verzweigtem C₁-C₂₀-Alkyl, C₃-C₂₀-Cycloalkyl, C₆-C₂₀-Aryl, C₃-C₂₀-Alkenyl, C₇-C₂₀-Arylakyl, C₈-C₂₀-Arylalkenyl oder C₇-C₂₀-Alkylaryl ausgewählt wird;
**L'** N oder O ist;
wenn **L** Cyclopentadienyl ist, **k** gleich 5 ist, wenn **L** Indenyl ist, **k** gleich 7 ist, wenn **L** Fluorenyl oder Benzoindenyl ist, **k** gleich 9 ist, wenn **L** Tetrahydroindenyl ist, **k** gleich 11 ist und wenn **L** Octahydrofluorenyl ist, **k** gleich 17 ist;
**z** gleich 0, 1 oder 2 ist;
**x** gleich 1, 2 oder 3 ist;
**y** gleich 1, 2 oder 3 ist;
**x + y + z** gleich der Wertigkeit von **M** ist;
**m** eine ganze Zahl mit dem Wert von 1, 2, 3 oder 4 ist;
**a** und **b** ganze Zahlen sind, deren Wert zwischen 0 und k-1 liegt;
**f** eine ganze Zahl ist, deren Wert zwischen 1 und **k** liegt;
**g** 0 oder 1 ist;
**c** und **e** gleich 0 oder 1 sind;
**a + b + c** mindestens 1 ist;
**a + g + c** mindestens 1 ist;
**d** gleich 0, 1 oder 2 ist;
wenn **Q** B ist, dann ist **c + d** = 1;
wenn **Q** C, Si, Ge oder Sn, dann ist **c + d** = 2;
wenn **L'** N ist, dann ist **g + e** = 1;
wenn **L'** O ist, dann ist **g** = 0 y **e** = 0.

2. Metallocenverbindung gemäss Anspruch 1, in welcher **R**^{I} geradkettiges oder verzweigtes C₁-C₂₀-Alkylen, C₃-C₂₀-Cycloalkylen, C₆-C₂₀-Arylen, C₇-C₂₀-Alkenyl, C₇-C₂₀-Arylalkenyl oder -Alkylarylen, oder eine SiR^{II}₂-Gruppe ist.

3. Metallocenverbindung gemäss Anspruch 1, in welcher R^{I}OH ausgewählt wird aus: CH₂-CH₂-OH, CH₂-CH₂-CH₂-OH, O-CH₂-CH₂-OH, SiMe₂-CH₂-CH₂-OH oder SiMe₂-CH₂-CH₂-CH₂-OH.

4. Metallocenverbindung gemäss irgendeinem der Ansprüche 1 bis 3, in welcher M Titan, Zirkonium oder Hafnium ist.

5. Metallocenverbindung gemäss irgendeinem der Ansprüche 1 bis 4, in welcher mindestens ein L ein Fluorenyl- oder Octahydrofluorenylring ist.

6. Verfahren zur Herstellung von Metallocenverbindungen der Formel I gemäss irgendeinem der Ansprüche 1 bis 5, wobei eine Verbindung der allgemeinen Formel [LRₖ₋ _{f}(R^{I}OJ)_{f}]]M', in welcher M' ein Alkalimetall und J eine die OH-Gruppe maskierende Schutzgruppe ist, mit einer Übergangsmetallverbindung der allgemeinen Formel (LRₖ)₂MXₙ(E)_{q} umgesetzt wird, in welcher E ein geradkettiger oder ringförmiger Ether ist, q eine zwischen 2 und 4 liegende Zahl ist und L, R, k, z, und X wie bereits definiert sind, gefolgt von einem Bruch der Gruppe O-J.

7. Verfahren zur Herstellung von Metallocenverbindungen der Formeln II und III gemäss irgendeinem der Ansprüche 1 bis 5, wobei eine Übergangsmetallverbindung der allgemeinen Formel MXₙ(E)_{q}, in welcher E ein geradkettiger oder ringförmiger Ether ist, q eine zwischen 0 und 4 liegende Zahl ist, und n 3 oder 4 ist, mit einer Verbindung der allgemeinen Formel 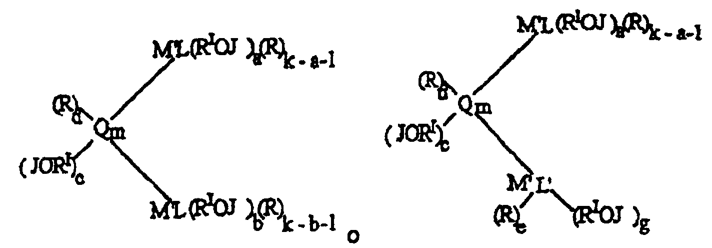 umgesetzt wird, in welcher M' ein Alkalimetall und J eine die OH-Gruppe maskierende Schutzgruppe ist, gefolgt von einem Bruch der Gruppe O-J.

8. Verfahren gemäss Anspruch 7, bei welchem die Verbindung der Formel MXₙ(E)_{q} aus der aus TiCl₄, ZrCl₄, HfCl₄, TiCl₃, TiCl₂·2THF bestehenden Gruppe ausgewählt wird.

9. Verfahren gemäss irgendeinem der Ansprüche 6 bis 8, bei welchem J SiR^{II}₃ ist und die Gruppe O-SiR^{II}₃ durch kontrollierte Hydrolysereaktionen gebrochen wird.

10. Verfahren gemäss irgendeinem der Ansprüche 6 oder 7, bei welchem M' Li, Na oder K ist.

## Revendications

1. Composé métallocène **caractérisé par** les formules suivantes :
(LRₖ)_{z}[LR_{k-f}(R^{I}OH)_{f}]ₓMX_{y} I 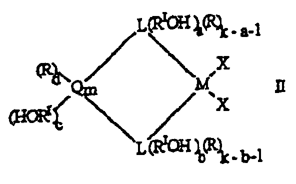 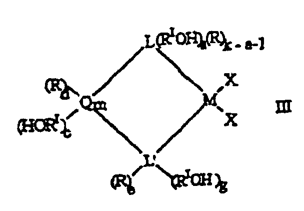
où :
**L**, identiques ou différents entre eux, sont sélectionnés parmi le groupe composé de : cyclopentadiényl, indényl, tétrahydroindényl, fluorényl, octahydrofluorényl ou benzoindényl ;
chaque **R** est sélectionné indépendamment parmi l'hydrogène, alkyl C₁-C₂₀, cycloalkyl C₃-C₂₀, aryl C₆-C₂₀, alcényl C₃-C₂₀, aryl-alkyl C₇-C₂₀, alkyl-aryl C₇-C₂₀, aryl-alcényl C₈-C₂₀, linéaire ou ramifié, substitué optionnellement par 1 à 10 atomes d'halogène ou un groupe SiR^{II}₃;
chaque **R**^{**I**}, identiques ou différents entre eux, est un groupe SiR^{II}₂ ou un groupe aliphatique divalent ou un hydrocarboné aromatique qui contient de 1 à 20 atomes de carbone, contenant optionnellement de 1 à 5 hétéro-atomes des groupes 14 à 16 de la Classification périodique des éléments et du bore;
chaque **Q** est sélectionné indépendamment parmi B, C, Si, Ge ou Sn;
**M** est un métal du groupe 3, 4 ou 10 de la Classification Périodique, Lanthanide ou Actinide ;
chaque **X** est sélectionné indépendamment parmi: hydrogène, chlore, brome, OR^{II}, NR^{II}₂, alkyl C₁-C₂₀ ou aryl C₆-C₂₀;
chaque **R**^{II} est sélectionné indépendamment parmi alkyl C₁-C₂₀, cycloalkyl C₃-C₂₀, aryl C₆-C₂₀, alcényl C₃-C₂₀, aryl-alkyl C₇-C₂₀, aryl-alcényl C₈-C₂₀, ou alkyl-aryl C₇-C₂₀, linéaire ou ramifié;
**L'** est N ou O ;
lorsque **L** est cyclopentadiényl **k** est égal à 5, lorsque **L** est indényl **k** est égal à 7, lorsque **L** est fluorényl ou benzoindényl **k** est égal à 9, lorsque **L** est tétrahydroindényl **k** est égal à 11 et lorsque **L** est octahydrofluorényl **k** est égal à 17 ;
**z** est égal à 0, 1 ou 2;
**x** est égal à 1, 2 ou 3;
**y** est égal à 1, 2 ou 3;
**x + y + z** est égal à la valence de **M;**
**m** est un nombre entier qui peut prendre les valeurs 1, 2, 3 ou 4;
**a** et **b** sont des nombres entiers dont la valeur varie de 0 à **k**-1;
**f** est un nombre entier dont la valeur varie de 1 à **k**;
**g** est 0 ou 1;
**c** et **e** sont égaux à 0 ou 1;
**a + b + c** est au moins 1;
**a + g + c** est au moins 1;
**d** est égal à 0, 1 ou 2;
lorsque **Q** est B alors **c + d** = 1;
lorsque **Q** est C, Si, Ge ou Sn, alors **c** + **d** = 2;
lorsque **L'** est **N,** alors **g + e** = 1;
lorsque **L'** est O, alors **g** = 0 et **e** = 0.

2. Composé métallocène selon la revendication 1, où **R**^{**I**} est : alkylène C₁-C₂₀, cycloalkylène C₃-C₂₀, arylène C₆-C₂₀, alcényl C₇-C₂₀, aryl-alkylène ou alkyl-arylène C₇-C₂₀, linéaire ou ramifié ou un groupe SiR^{II}₂.

3. Métallocène selon la revendication 1, où R^{I}OH est sélectionné parmi : CH₂-CH₂-OH, CH₂-CH₂-CH₂-OH, O-CH₂-CH₂-OH, SiMe₂-CH₂-CH₂-OH ou SiMe₂-CH₂-CH₂-CH₂-OH.

4. Métallocène selon n'importe quelle des revendications 1 à 3, où M est titane, zirconium ou hafnium.

5. Composé métallocène selon n'importe quelle des revendications 1 à 4, où au moins un L est un anneau fluorényl ou octahydrofluorényl.

6. Procédé pour obtenir des composés métallocène selon la formule I selon n'importe quelle des revendications 1 à 5 en faisant réagir un composé selon la formule générale [LR_{k-f}(R^{I}OJ)_{f}]]M', où M' est un métal alcalin et J est un groupe protecteur qui masque le groupe OH, avec un composé métallique de transition de la formule générale (LRₖ)₂MXₙ(E)_{q}, où E es un éther linéaire ou cyclique, q est un nombre qui varie de 0 à 4 et n est un nombre entier qui varie de 2 à 4 et L, R, k, z, et X ont déjà été définis, suivi d'une rupture du groupe O-J.

7. Procédé pour obtenir des composés métallocène des formules II et III selon n'importe quelle des revendications 1 à 5 en faisant réagir un composé métallique de transition de la formule générale MXₙ(E)_{q}, où E est un éther linéaire ou cyclique, q est un nombre qui varie de 0 à 4, n est 3 ou 4, avec un composé de la formule générale 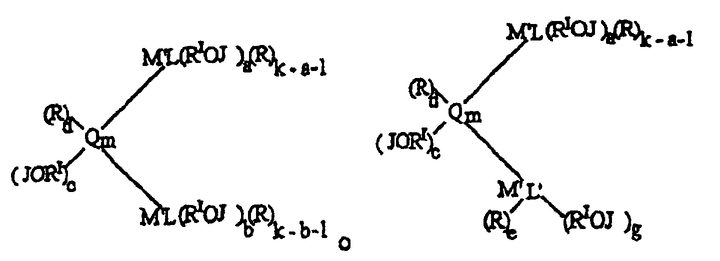 où M' est un métal alcalin et J est un groupe protecteur qui masque le groupe OH, suivi d'une rupture du groupe O-J.

8. Procédé selon la revendication 7, où le composé de formule MXₙ(E)_{q} est sélectionné parmi le groupe composé par TiCl₄, ZrCl₄, HfCl₄, TiCl₃, TiCl₂·2THF.

9. Procédé selon n'importe quelle des revendications de 6 à 8, où J est SiR^{II}₃ et le groupe O-SiR^{II}₃ se rompt par réactions d'hydrolyse contrôlée.

10. Procédé selon n'importe quelle des revendications 6 ou 7, où M' est Li, Na ou K.
